(19) Europäisches Patentamt
European Patent Office
Office européen des brevets

(11) EP 3 390 563 B1

(12) EUROPEAN PATENT SPECIFICATION

(45) Date of publication and mention of the grant of the patent:
**28.04.2021 Bulletin 2021/17**

(21) Application number: **16876383.7**

(22) Date of filing: **05.12.2016**

(51) Int Cl.:
***C08L 67/04*** *(2006.01)*

(86) International application number:
**PCT/US2016/064897**

(87) International publication number:
**WO 2017/105887 (22.06.2017 Gazette 2017/25)**

# (54) POLYLACTIC ACID POLYMER BASED FILM COMPRISING AN ADHESIVE LAYER

AUF POLYMILCHSÄUREPOLYMER BASIERENDER FILM MIT EINER KLEBESCHICHT

FILM À BASE DE POLYMÈRE DE POLY(ACIDE LACTIQUE) COMPRENANT UNE COUCHE ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2015 PCT/US2015/065557**
**15.02.2016 US 201662295275 P**
**21.06.2016 US 201662352662 P**

(43) Date of publication of application:
**24.10.2018 Bulletin 2018/43**

(73) Proprietor: **3M Innovative Properties Company**
**St. Paul, MN 55133-3427 (US)**

(72) Inventors:
- **BARTUSIAK, Joseph T.**
  **Saint Paul**
  **Minnesota 55133-3427 (US)**
- **ZHOU, Ning**
  **Saint Paul**
  **Minnesota 55133-3427 (US)**
- **DEHN, Derek J.**
  **Saint Paul**
  **Minnesota 55133-3427 (US)**
- **EMSLANDER, Jeffrey O.**
  **Saint Paul**
  **Minnesota 55133-3427 (US)**
- **LIPSCOMB, Corinne E.**
  **Saint Paul**
  **Minnesota 55133-3427 (US)**
- **SETH, Jayshree**
  **Saint Paul**
  **Minnesota 55133-3427 (US)**
- **CARLSON, Jeffrey A.**
  **Saint Paul**
  **Minnesota 55133-3427 (US)**

(74) Representative: **Mathys & Squire**
**Theatinerstraße 7**
**80333 München (DE)**

(56) References cited:
**EP-A1- 0 587 069** **WO-A1-2011/060001**
**WO-A1-2011/082052** **WO-A1-2011/082052**

- **MAJID JAMSHIDIAN ET AL: "Poly-Lactic Acid: Production, Applications, Nanocomposites, and Release Studies", COMPREHENSIVE REVIEWS IN FOOD SCIENCE AND FOOD SAFETY, vol. 9, no. 5, 26 September 2010 (2010-09-26), pages 552-571, XP055223602, US ISSN: 1541-4337, DOI: 10.1111/j.1541-4337.2010.00126.x**
- **Oliver Brüggemann: "Polyvinylacetate", RÖMPP online, 31 December 2009 (2009-12-31), XP055591580, Retrieved from the Internet: URL:https://roempp.thieme.de/roempp4.0/do/data/RD-16-03642 [retrieved on 2019-05-24]**
- **GAJRIA A M ET AL: "Miscibility and biodegradability of blends of poly(lactic acid) and poly(vinyl acetate)", POLYMER, ELSEVIER SCIENCE PUBLISHERS B.V, GB, vol. 37, no. 3, 1 January 1996 (1996-01-01), pages 437-444, XP004065446, ISSN: 0032-3861, DOI: 10.1016/0032-3861(96)82913-2**
- **GAJRIA, A. M. ET AL.: 'Miscibility and biodegradability of blends of poly(lactic acid) and poly(vinyl acetate).' POLYMER vol. 37, no. 3, 11 February 1999, pages 437 - 444, XP004065446**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GOTTFRIED, W. E. ET AL.: 'Principles of Aging.' RESISTANCE AND STABILITY OF POLYMERS 31 December 2013, pages 1 - 138, XP009505988

## Description

### Background

WO 2011/082052 describes a composition comprising: polylactide resin; and plasticizer of the formula

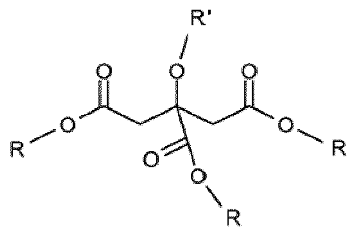

wherein R may be the same or different and wherein at least one R is a branched alkyl group having a carbon chain length of $C_5$ or greater; and R' is an H or an acyl group; as well as a polylactide film made with said composition wherein the film is at least partially crystalline.

In an article entitled "Miscibility and biodegradability of blends of poly(lactic acid) and poly( vinyl acetate)" in Polymer 37(3)1996, pp 437-444, Ajay M. Gajria et al. describe blends of poly(lactic acid) PLA and poly(vinyl acetate) (PVA) having a Tg above 35°C. This article is cited by Majid Jamshidian et al. in a later published article entitled "Poly-Lactic Acid: Production, Applications, Nanocomposites, and Release Studies" in Comprehensive Reviews in Food Science and Food Safety, Volume 9. 2010, pages 552 to 571.

### Summary

An article is described such as a tape or sheet, comprising a PLA-based film and a layer of (e.g. pressure sensitive) adhesive disposed on the film.

The PLA-based film comprises a semicrystalline polylactic acid polymer; a second polymer, polyvinyl acetate polymer having a glass transition temperature (Tg) of at least 25°C; and plasticizer; and the film composition does not exhibit plasticizer migration when aged at 80°C for 24 hours (according to the test methods described herein) and the film has a Tg less than 25°C.

In some embodiments, the tape or sheet further comprises a low adhesion backsize or a release liner. The article can be suitable for various end-uses. In one embodiment, the tape is a paint masking tape. In another embodiment, the tape is a floor marking tape.

### Brief Description of the Drawings

FIG. 1 is a representative DSC profile of a composition comprising a nucleating agent exhibiting a sharp crystallization peak exotherm during cooling.

FIG. 2 is a representative DSC profile of a composition without a nucleating agent that did not exhibit a crystallization peak exotherm during cooling.

FIG. 3 depicts Dynamic Mechanical Analysis results of Example 12.

FIG. 4 depicts Dynamic Mechanical Analysis results of Example 16.

### Detailed Description

The articles described herein comprise a polylactic acid ("PLA") polymer film. Lactic acid is a renewable material obtained by the bacterial fermentation of corn starch or cane sugar, and thus is considered a natural or in otherwords "biomass" material. Lactic acid has two optical isomers: L-lactic acid (also known as (S)-lactic acid) and D-lactic acid (also known as (R)-lactic acid), depicted as follows:

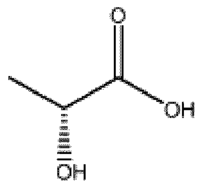

D-lactic acid

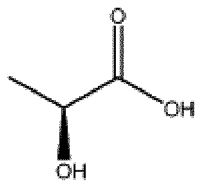

L-lactic acid

Polyesterification of lactic acid affords polylactic acid polymer.

More typically, lactic acid is typically converted to the cyclic lactide monomer, and the lactide undergoes ring opening polymerization, such as depicted as follows:

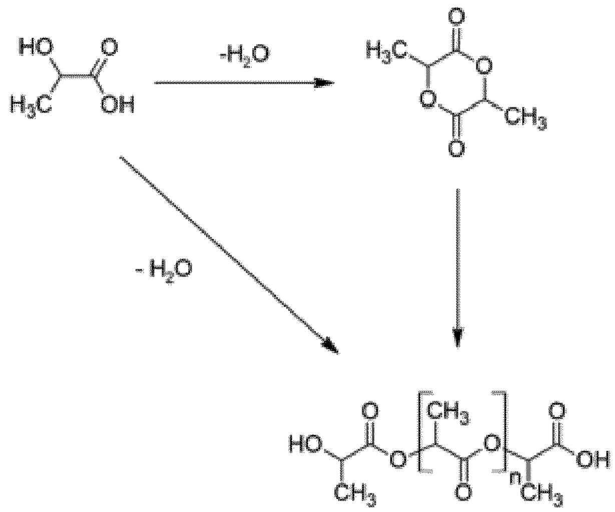


The resulting polymer material is typically referred to as polylactide polymer.

The degree of crystallinity, and hence many important properties, is largely controlled by the ratio of D and/or meso-lactide to L cyclic lactide monomer used. Likewise, for polymers prepared by direct polyesterification of lactic acid, the degree of crystallinity is largely controlled by the ratio of polymerized units derived from D -lactic acid to polymerized units derived from L-lactic acid.

The films of the articles described herein generally comprise a semicrystalline PLA polymer alone or in combination with an amorphous PLA polymer. Both the semicrystalline and amorphous PLA polymers generally comprise high concentrations of polymerized units derived from L-lactic acid (e.g. L-lactide) with low concentrations of polymerized units derived from D-lactic acid (e.g. D-lactide).

The semicrystalline PLA polymer typically comprises typically comprises at least 90, 91, 92, 93, 94, or 95 wt.-% of polymerized units derived from L-lactic acid (e.g. L-lactide) and no greater than 10, 9, 8, 7, 6, or 5 wt.-% of polymerized units derived from D-lactic acid (e.g. D-lactide and/or meso-lactide). In yet other embodiments, the semicrystalline PLA polymer comprises at least 96 wt.-% of polymerized units derived from L-lactic acid (e.g. L-lactide) and less than 4, 3, or 2 wt.-% of polymerized units derived from D-lactic acid (e.g. D-lactide and/or meso-lactide. Likewise the film comprises an even lower concentration of polymerized units derived from D-lactic acid (e.g. D-lactide and/or meso-lactide) depending on the concentration of semicrystalline PLA polymer in the film. For example, if the film composition comprises 15 wt.-% of a semicrystalline PLA having about 2 wt.-% D-lactide and/or meso-lactide, the film composition comprises about 0.3 wt.-% D-lactide and/or meso-lactide. The film generally comprises no greater than 9, 8, 7, 6, 5, 4, 3, 2, 1.5, 1.0, 0.5, 0.4, 0.3, 0.2, or 0.1 wt.-% polymerized units derived from D-lactic acid (e.g. D-lactide and/or meso-lactide). Suitable

examples of semicrystalline PLA include Natureworks™ Ingeo™ 4042D and 4032D. These polymers have been described in the literature as having molecular weight Mw of about 200,000 g/mole; Mn of about 100,000 g/mole; and a polydispersity of about 2.0.

Alternatively, the semicrystalline PLA polymer may comprises at least 90, 91, 92, 93, 94, or 95 wt.-% of polymerized units derived from D-lactic acid (e.g. D-lactide) and no greater than 10, 9, 8, 7, 6, or 5 wt.-% of polymerized units derived from L-lactic acid (e.g. L-lactide and/or meso-lactide). In yet other embodiments, the semicrystalline PLA polymer comprises at least 96 wt.-% of polymerized units derived from D-lactic acid (e.g. D-lactide) and less than 4, 3, or 2 wt.-% of polymerized units derived from L-lactic acid (e.g. L-lactide and/or meso-lactide. Likewise the film comprises an even lower concentration of polymerized units derived from L-lactic acid (e.g. L-lactide and/or meso-lactide) depending on the concentration of semicrystalline PLA polymer in the film. For example, if the film composition comprises 15 wt.-% of a semicrystalline PLA having about 2 wt.-% L-lactide and/or meso-lactide, the film composition comprises about 0.3 wt.-% L-lactide and/or meso-lactide. The film generally comprises no greater than 9, 8, 7, 6, 5, 4, 3, 2, 1.5, 1.0, 0.5, 0.4, 0.3, 0.2, or 0.1 wt.-% polymerized units derived from L-lactic acid (e.g. L-lactide and/or meso-lactide). Examples of such semicrystalline PLA are available as "Synterra™ PDLA".

The film composition may further comprise an amorphous PLA polymer blended with the semicrystalline PLA. The amorphous PLA typically comprises no more than 90 wt.-% of polymerized units derived from L-lactic acid and greater than 10 wt.-% of polymerized units derived from D lactic acid (e.g. D-lactic lactide and/or meso-lactide). In some embodiments, the amorphous PLA comprises at least 80 or 85 wt.-% of polymerized units derived from L-lactic acid (e.g. L-lactide). In some embodiments, the amorphous PLA comprises no greater than 20 or 15 wt.-%. of polymerized units derived from D-lactic acid (e.g. D-lactide and/or meso-lactide). A suitable amorphous PLA includes Natureworks™ Ingeo™ 4060D grade. This polymer has been described in the literature to have a molecular weight Mw of about 180,000 g/mole.

Alternatively, the amorphous PLA typically comprises no more than 90 wt.-% of polymerized units derived from D-lactic acid and greater than 10 wt.-% of polymerized units derived from L lactic acid (e.g. L-lactic lactide and/or meso-lactide). In some embodiments, the amorphous PLA comprises at least 80 or 85 wt.-% of polymerized units derived from D-lactic acid (e.g. D-lactide). In some embodiments, the amorphous PLA comprises no greater than 20 or 15 wt.-%. of polymerized units derived from L-lactic acid (e.g. L-lactide and/or meso-lactide).

The PLA polymers are preferably "film grade" polymers, having a melt flow rate (as measured according to ASTM D1238) of no greater than 25, 20, 15, or 10 g/min at 210°C with a mass of 2.16 kg. In some embodiments, the PLA polymer has a melt flow rate of less than 10 or 9 g/min at 210°C. The melt flow rate is related to the molecular weight of the PLA polymer. The PLA polymer typically has a weight average molecular weight (Mw) as determined by Gel Permeation Chromatography with polystyrene standards of at least 50,000 g/mol; 75,000 g/mol; 100,000 g/mol; 125,000 g/mol; 150,000 g/mol. In some embodiments, the molecular weight (Mw) is no greater than 400,000 g/mol; 350,000 g/mol or 300,000 g/mol.

The PLA polymers typically have a tensile strength ranging from about 25 to 150 MPa; a tensile modulus ranging from about 1000 to 7500 MPa; and a tensile elongation of at least 3, 4, or 5 ranging up to about 10 or 15%. In some embodiments, the tensile strength at break of the PLA polymer is at least 30, 35, 40, 45 or 50 MPa. In some embodiments, the tensile strength of the PLA polymer is no greater than 125, 100 or 75 MPa. In some embodiments, the tensile modulus of the PLA polymer is at least 1500, 2000, 2500, or 3000 MPa. In some embodiments, the tensile modulus of the PLA polymer is no greater than 7000, 6500, 6000, 5500, 5000, or 4000 MPa. Such tensile and elongation properties can be determined by ASTM D882 and are typically reported by the manufacturer or supplier of such PLA polymers.

The PLA polymers generally have a glass transition temperature, Tg, as can be determined by Differential Scanning Calorimetry (DSC) as described in the forthcoming examples, ranging from about 50 to 65°C. In some embodiments, the Tg is at least 51, 52, 53, 54, or 55°C.

The semicrystalline PLA polymers typically have a (e.g. peak) melting point ranging from 140 to 175°C, 180°C, 185°C or 190°C. In some embodiments, the (e.g. peak) melting point is at least 145, 150, or 155°C. The PLA polymer, typically comprising a semicrystalline PLA alone or in combination with an amorphous PLA polymer can be melt-processed at temperatures of 180, 190, 200, 210, 220 or 230 °C.

In one embodiment, PLA polymers can crystallize to form a stereocomplex (Macromolecules, 1987, 20 (4), pp 904-906). The PLA stereocomplex is formed when PLLA (a PLA homopolymer polymerized from mostly L-lactic acid or L-lactide units) is blended with PDLA (a PLA homopolymer polymerized from mostly D-lactic acid or D-lactide units). The stereocomplex crystal of PLA is of interest because the melting temperature of this crystal ranges from 210-250 °C. The higher melting temperature stereocomplex PLA crystals increase the thermal stability of the PLA-based material. The PLA stereocomplex crystal is also know to effectively nucleate PLA homopolymer crystallization (Polymer, Volume 47, Issue 15, 12 July 2006, Page 5430). This nucleation effect increases the overall percent crystallinity of the PLA-based material, thus increasing the material's thermal stability.

The film composition typically comprises a semicrystalline PLA polymer or a blend of semicrystalline and amorphous PLA in an amount of at least 40, 45 or 50 wt.-%, based on the total weight of the PLA polymer, second

(polyvinyl acetate) polymer, and plasticizer. The total amount of PLA polymer is typically no greater than 90, 85, 80, 75, or 70 wt.-% of the total weight of the PLA polymer, second (polyvinyl acetate) polymer, and plasticizer

When the film composition comprises a blend of semicrystalline and amorphous PLA, the amount of semicrystalline PLA is typically at least 5, 10, 15 or 20 wt.-%, based on the total weight of the PLA polymer, second (polyvinyl acetate) polymer, and plasticizer. In some embodiments, the amount of amorphous PLA polymer ranges from 10, 15, 25 or 30 wt.-% up to 50, 55 or 60 wt.-% based on the total weight of the PLA polymer, second (polyvinyl acetate) polymer, and plasticizer. The amount of amorphous PLA polymer can be greater than the amount of crystalline polymer.

The film composition further comprises a second polymer, polyvinyl acetate polymer. The second polymer can improve the compatibility of the PLA with a plasticizer such that the plasticizer concentration can be increased without plasticizer migration (as determined by the test method described in the forthcoming examples).

The polyvinyl acetate polymer has a Tg of at least 25, or at least 30, 35 or 40 °C. The Tg of the polyvinyl acetate polymer is typically no greater than 80, 75, 70, 65, 60, 55, 50 or 45°C.

The polyvinyl acetate polymer typically has a weight or number average molecular weight (as determined by Size Exclusion Chromatography with polystyrene standards) of at least 50,000 g/mol; 75,000 g/mol; 100,000 g/mol; 125,000 g/mol; 150,000 g/mol; 175,000 g/mol; 200,000 g/mol; 225,000 g/mol or 250,000 g/mol. In some embodiments, the molecular weight (Mw) is no greater than 2,000,000 g/mol; 1,500,000 g/mol; 1,000,000 g/mol; 750,000 g/mol; 500,000 g/mol; 450,000 g/mol; 400,000 g/mol; 350,000 g/mol or 300,000 g/mol. In some embodiments, the molecular weight of the polyvinyl acetate polymer is greater than the molecular weight of the PLA polymer(s). In one embodiment, the polyvinyl acetate polymer may be characterized as having a viscosity in a 10 wt.% ethyl acetate solution at 20°C ranging from 10 to 50 or 100 mPa*s. In another embodiment, the second (polyvinyl) acetate polymer may be characterized as having a viscosity in a 5 wt.% ethyl acetate solution at 20°C ranging from 5 to 20 mPa*s.

The polyvinyl acetate polymer is typically a homopolymer. However, the polymer may comprise relatively low concentrations of repeat units derived from other comonomers, provided that the Tg of the polyvinyl acetate polymer is within the ranges previously described. Other comonomers include for example acrylic monomers such as acrylic acid and methyl acrylate; vinyl monomers such as vinyl chloride and vinyl pyrollidone; and $C_2$-$C_8$ alkylene monomers, such as ethylene. The total concentration of repeats derived from other comonomers of the polyvinyl acetate polymer is typically no greater than 10, 9, 8, 7, 6, or 5 wt.-%. In some embodiments, the concentration of repeats derived from other comonomers of the polyvinyl acetate polymer is typically no greater than 4, 3, 2, 1 or 0.5 wt.-%. The polyvinyl acetate polymer typically has a low level of hydrolysis. The polymerized units of the polyvinyl acetate polymer that are hydrolyzed to units of vinyl alcohol is generally no greater than 10, 9, 8, 7, 6, 5, 4, 3, 2, 1 or 0.5 mol% of the polyvinyl acetate polymer.

Polyvinyl acetate polymers are commercially available from various suppliers including Wacker under the trade designation VINNAPAS™ and from Vinavil Americas Corporation, West Chicago, IL under the trade designation VINAVIL. Prior to combining with the PLA, such polyvinyl acetate polymers are often in a (e.g. white) solid powder or colorless bead form. In some embodiments, the polyvinyl acetate polymer (e.g. powder, prior to combining with the PLA polymer) is not water redispersible.

A single second polyvinyl acetate) polymer may be utilized or a combinations of two or more second (polyvinyl acetate) polymers.

The total amount of second (. polyvinyl acetate) polymer present in the film composition described herein is at least about 10 wt.-% and typically no greater than about 50, 45, or 40 wt.-%, based on the total weight of the PLA polymer, second (polyvinyl acetate) polymer, and plasticizer. In some embodiments, the concentration of second (polyvinyl acetate) polymer is present in an amount of at least 15 or 20 wt.-%.

The film composition has a Tg of less than, 25, or less than 24, 23, 22, 21, or 20°C and does not exhibit plasticizer migration when aged at 80°C for 24 hours (according to the test methods described in the examples). This property is attributable to the inclusion of the second polyvinyl acetate polymer.

The film composition further comprises a plasticizer. The total amount of plasticizer in the film composition typically ranges from about 5 wt- % to about 35, 40, 45 or 50 wt.-%, based on total weight of PLA polymer, second (e.g. polyvinyl acetate) polymer, and plasticizer. In some embodiments, the plasticizer concentration is at least 6, 7, 8, 9, 10, 11, 12, 13, 14, or 15 wt.-% of the film composition.

Various plasticizers that are capable of plasticizing PLA have been described in the art. The plasticizers are generally a liquid at 25°C and typically have a molecular weight ranging from about 200 g/mol to 10,000 g/mol. In some embodiments, the molecular weight of the plasticizer is no greater than 5,000 g/mol. In other embodiments, the molecular weight of the plasticizer is no greater than 4,000, 3,000, 2,000 or 1,000 g/mol. Various combinations of plasticizers may be utilized.

The plasticizer preferably comprises one or more alkyl or aliphatic esters or ether groups. Multifunctional esters and/or ethers are typically preferred. These include alkyl phosphate esters, dialkylether diesters, tricarboxylic esters, epoxidized oils and esters, polyesters, polyglycol diesters, alkyl alkylether diesters, aliphatic diesters, alkylether monoesters, citrate esters, dicarboxylic esters, vegetable oils and their derivatives, and esters of glycerine. Such plasticizers generally lack aromatic groups and halogen atoms and are anticipated to be biodegradable. Such plasticizers commonly

further comprise linear or branched alkyl terminal group groups having a carbon chain length of $C_2$ to $C_{10}$.

In one embodiment, the plasticizer is a bio-based citrate-based plasticizer represented by the following Formula (I):

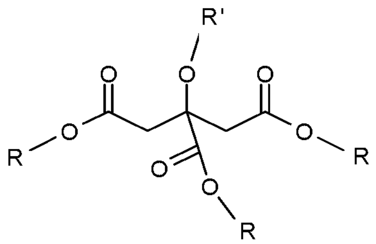

(I)

wherein

R are independently alkyl groups that may be the same or different; and
R' is an H or an ($C_1$ to $C_{10}$) acyl group.

R are typically independently linear or branched alkyl groups having a carbon chain length of $C_1$ to $C_{10}$. In some embodiments, R is a $C_2$ to $C_8$ or $C_2$ to $C_4$ linear alkyl group. In some embodiments, R' is acetyl. In other embodiments, at least one R is a branched alkyl groups having a carbon chain length of $C_5$ or greater. In some embodiments, the branched alkyl group has a carbon chain length no greater than 8.

Representative citrate-based plasticizer include for example triethyl citrate, acetyl triethyl citrate, tributyl citrate, acetyl tributyl citrate, trihexyl citrate, acetyl trihexyl citrate, trioctyl citrate, acetyl trioctyl citrate, butyryl trihexyl citrate, acetyl tris-3-methylbutyl citrate, acetyl tris-2-methylbutyl citrate, acetyl tris-2-ethylhexyl citrate, and acetyl tris-2-octyl citrate. One representative citrate-based plasticizer is acetyl tri-n-butyl citrate, available under the trade designation CITROFLEX A-4 PLASTICIZER from Vertellus Specialties, Incorporated, Indianapolis, IN.

In another embodiment, the plasticizer comprises a polyethylene glycol backbone and ester alkyl terminal groups. The molecular weight of the polyethylene glycol segment is typically at least 100, 150 or 200 g/mole and no greater than 1,000 g/mole. In some embodiments, the polyethylene glycol segment has a molecular weight no greater than 900, 800, 700, or 600 g/mole. Examples include polyethylene glycol (400) di-ethylhexonate availalble from Hallstar, Chicago, IL under the trade designation "TegMeR™ 809" and tetraethylene glycol di-ethylhexonate available from Hallstar, Chicago, IL under the trade designation "TegMeR™ 804".

In another embodiment, the plasticizer may be characterized as a polymeric adipate (i.e. a polyester derived from adipic acid) such as commercially available from Eastman, Kingsport, TN, as Admex™ 6995.

In another embodiment, the plasticizer is a substituted or unsubstituted aliphatic polyester, such as described in U.S. Patent No. 8,158,731.

In some embodiments, the aliphatic polyester plasticizer comprises repeating units derivable from succinic acid, glutaric acid, adipic acid, and/or sebacic acid. In some embodiments, the polyesters of the polymer blends disclosed herein comprise repeating units derivable from 1,3-propanediol and/or 1,2-propanediol. In some embodiments, the polyesters of the polymer blends disclosed herein comprise one or two terminator units derivable from 1-octanol, 1-decanol, and/or mixtures thereof. In some embodiments, the polyesters of the polymer blends disclosed herein comprise repeating units derivable from succinic acid, glutaric acid, adipic acid, and/or sebacic acid; repeating units derivable from 1,3-propanediol and/or 1,2-propanediol; and one or two terminator units derivable from 1-octanol, 1-decanol, and/or mixtures thereof.

In some embodiments, the aliphatic polyester plasticizer has the following formula:

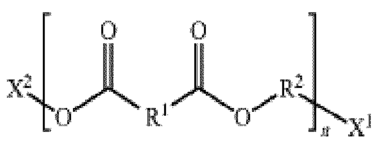

wherein n is 1 to 1000; $R^1$ is selected from the group consisting of a covalent bond and a substituted or unsubstituted aliphatic hydrocarbon group having 1 to 18 carbon atoms; $R^2$ is a substituted or unsubstituted aliphatic hydrocarbon group having 1 to 20 carbon atoms; $X^1$ is selected from the group consisting of -OH, $-O_2C-R^1-CO_2H$, and $-O_2C-R^1-CO_2R^3$; $X^2$ is selected from the group consisting of -H, - $R^2$-OH, and $R^3$; and $R^3$ is a substituted or unsubstituted aliphatic hydrocarbon group having 1 to 20 carbon atoms. In some embodiments, the polyester has the above formula with the

proviso that if $X^1$ is - OH or $-O_2C-R^1-CO_2H$, then $X^2$ is $R^3$.

The number of repeat units n is selected such that the aliphatic polyester plasticizer has the previously described molecular weight.

In some embodiments, $R^1$, $R^2$, and/or $R^3$ are alkyl groups. $R^1$ alkyl groups can have, for example, from 1 to 18 carbon atoms, from 1 to 10 carbon atoms, from 1 to 8 carbon atoms, from 2 to 7 carbon atoms, from 2 to 6 carbon atoms, from 2 to 5 carbon atoms, from 2 to 4 carbon atoms, and/or 3 carbon atoms. $R^1$, for example, can be selected from the group consisting of $-(CH_2)_2-$, $-(CH_2)_3-$, $-(CH_2)_4-$, and - $(CH_2)_8-$. $R^2$ alkyl groups can have, for example, from 1 to 20 carbon atoms, from 1 to 10 carbon atoms, from 1 to 8 carbon atoms, from 2 to 7 carbon atoms, from 2 to 6 carbon atoms, from 2 to 5 carbon atoms, from 2 to 4 carbon atoms, and/or 3 carbon atoms. $R^2$, for example, can be selected from the group consisting of $-(CH_2)_3-$, $-CH_2CH(CH_3)-$, and $-CH(CH_3)CH_2-$. $R^3$ alkyl groups can have, for example, from 1 to 20 carbon atoms, from 1 to 18 carbon atoms, from 2 to 16 carbon atoms, from 3 to 14 carbon atoms, from 4 to 12 carbon atoms, from 6 to 12 carbon atoms, from 8 to 12 carbon atoms, and/or from 8 to 10 carbon atoms. $R^3$, for example, also can be a mixture comprising $-(CH_2)_7CH_3$ and $--(CH_2)_9CH_3$.

In some embodiments, $R^1$ is an alkyl group having from 1 to 10 carbons, $R^2$ is an alkyl group having from 1 to 10 carbons, and $R^3$ is an alkyl group having from 1 to 20 carbons. In other embodiments, $R^1$ is an alkyl group having from 2 to 6 carbons, $R^2$ is an alkyl group having from 2 to 6 carbons, and $R^3$ is an alkyl group having from 8 to 12 carbons. In still other embodiments, $R^1$ is an alkyl group having from 2 to 4 carbons, $R^2$ is an alkyl group having from 2 to 3 carbons, and $R^3$ is an alkyl group having from 8 to 10 carbons. In yet other embodiments, $R^1$ is selected from the group consisting of $-(CH_2)_2-$,
$-(CH_2)_3-$, $-(CH_2)_4-$, and $-(CH_2)_8-$, $R^2$ is selected from the group consisting of $-(CH_2)_3-$,
$-CH_2CH(CH_3)-$, and $-CH(CH_3)CH_2-$, and $R^3$ is a mixture comprising $-(CH_2)_7CH_3$ and
$-(CH_2)_9CH_3$.

The aliphatic polyester plasticizer can have an acid value of about zero to about 20, or greater. The acid value of the polyesters can be determined by known methods for measuring the number of milligrams of potassium hydroxide necessary to neutralize the free acids in one gram of polyester sample.

Plasticizer with a low acid value is typically preferred for shelf-life stability and/or durability of the film. In some embodiments, the acid value of the plasticizer is preferably no greater than 10, 9, 8, 7, 6, 5, 4, 3, 2 or 1.

The aliphatic polyester plasticizer can have a hydroxyl value of about zero to about 110, for example, about 1 to about 40, about 10 to about 30, about 15 to about 25, about 30 to about 110, about 40 to about 110, about 50 to about 110, and/or about 60 to about 90. The polyesters also can have a hydroxyl value greater than about 110. The hydroxyl value of the polyesters can be determined by known methods for measuring hydroxyl groups, such as the methods described by ASTM Test Method D 4274.

One representative aliphatic polyester plasticizer is available from Hallstar, Chicago, IL, as the trade designation HALLGREEN R-8010™.

In some embodiments, the plasticizer compound typically has little or no hydroxyl groups. In some embodiments, the wt.-% percent of hydroxyl groups relative to the total weight of the plasticizer compound is no greater than 10, 9, 6, 7, 6, 5, 4, 3, 2, 1 wt.-%. In some embodiments the plasticizer compound contains no hydroxyl groups. Thus, in this embodiment, the plasticizer is not glycerol or water.

To facilitate the rate of crystallization, a nucleating agent may also be present in the PLA film composition. Suitable nucleating agent(s) include for example inorganic minerals, organic compounds, salts of organic acids and imides, finely divided crystalline polymers with a melting point above the processing temperature of PLA, and combinations of two or more of the foregoing. Suitable nucleating agents typically have an average particle size of at least 25 nanometers, or at least 0.1 micron. Combinations of two or more different nucleating agents may also be used.

Examples of useful nucleating agents include, for example, talc (hydrated magnesium silicate - $H_2Mg_3(SiO_3)_4$ or $Mg_3Si_4O_{10}(OH)_2$), silica ($SiO_2$), titania ($TiO_2$), alumina ($Al_2O_3$), zinc oxide, sodium salt of saccharin, calcium silicate, sodium benzoate, calcium titanate, aromatic sulfonate derivative, boron nitride, copper phthalocyanine, phthalocyanine, sodium salt of saccharin, isotactic polypropylene, and polybutylene terephthalate.

When an organic nucleating agent is present, the nucleating agent is typically at a concentration of at least 0.01, 0.02, 0.03, 0.04, 0.05, 0.1, 0.15 or 0.2 wt.-% ranging up to about 1, 2, 3, 4 or 5 wt.-% based on the total weight of the film composition. When the nucleating agent is an inorganic oxide filler such as silica, alumina, zinc oxide, and talc, the concentration can be higher.

In one embodiment, the nucleating agent may be characterized as a salt of a phosphorouscontaining aromatic organic acid such as zinc phenylphosphonate, magnesium phenylphosphonate, disodium 4-tert-butylphenyl phosponate, and sodium diphenylphosphinates.

One favored nucleating agent is zinc phenylphosphonate having the following chemical formula:

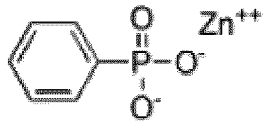

available from Nissan Chemical Industries, Ltd under the trade designation "Ecopromote".

In some embodiments, inorganic fillers may be used to prevent blocking or sticking of layers or rolls of the film during storage and transport. Inorganic fillers include clays and minerals, either surface modified or not. Examples include talc, diatomaceous earth, silica, mica, kaolin, titanium dioxide, perlite, and wollastonite.

Organic biomaterial fillers include a variety of forest and agricultural products, either with or without modification. Examples include cellulose, wheat, starch, modified starch, chitin, chitosan, keratin, cellulosic materials derived from agricultural products, gluten, flour, and guar gum. The term "flour" concerns generally a film composition having protein-containing and starch-containing fractions originating from one and the same vegetable source, wherein the protein-containing fraction and the starch-containing fraction have not been separated from one another. Typical proteins present in the flours are globulins, albumins, glutenins, secalins, prolamins, glutelins. In typical embodiments, the film composition comprises little or no organic biomaterial fillers such a flour. Thus, the concentration of organic biomaterial filler (e.g. flour) is typically less than 10, 9, 8, 7, 6, 5, 4, 3, 2, or 1 wt.-% of the total film composition.

In some embodiments, the film comprises an anti-blocking agent such as a fatty acid derivative. One suitable anti-blocking agent is a mixture of PLA polymer, 5-10 wt.-% of a fatty acid derivative and 20 to 40 wt.-% of silica, such as available under the trade designation SUKANO DC S511 from Sukano Polymers Corporation Duncan, SC.

The film may optionally contain one or more conventional additives. Additives include, for example, antioxidants, stabilizers, ultraviolet absorbers, lubricants, processing aids, antistatic agents, colorants, impact resistance aids, fillers (e.g. diatomaceous earth), matting agents, flame retardants (e.g. zinc borate), and pigments (e.g. titanium dioxide). Some examples of fillers or pigments include inorganic oxide materials such as zinc oxide, titanium dioxide, silica, carbon black, calcium carbonate, antimony trioxide, metal powders, mica, graphite, talc, ceramic microspheres, glass or polymeric beads or bubbles, fibers, and starch .

When present, the amount of additive can be at least 0.1, 0.2, 0.3, 0.4, or 0.5 wt.-%. In some embodiments, the amount of additive is no greater than 25, 20, 15, 10 or 5 wt.-% of the total film composition. In other embodiments, the concentration of additive can range up to 40, 45, 50, 55 or about 65 wt.-% of the total film composition.

When the film is a monolithic film, the thickness of the film is typically at least 10, 15, 20, or 25 microns (1 mil) to 500 microns (20 mils) thickness. In some embodiments, the thickness of the film is no greater than 2500, 2000, 1500, 1000, 800, 400, 300, 200, 150 or 50 microns. The film may be in the form of individual sheets, particularly for a thickness of greater than 50 mils. The (e.g. thinner) film may be in the form of a roll-good.

When the film is a film layer of a multilayer film, the multilayer film typically has the thickness just described. However, the thickness of the film layer may be less than 10 microns. In one embodiment, the film layer comprising the film composition described herein is an exterior layer or in other words a skin layer. A second film layer is disposed upon the skin layer. The second film layer typically has a different composition than the skin layer.

In preparing a film composition as described herein, the PLA, second polymer such as PVAc, plasticizer, nucleating agent, etc. are heated (e.g. 180 - 250°C) and thoroughly mixed using any suitable means known by those of ordinary skill in the art. For example, the film composition may be mixed by use of a (e.g., Brabender) mixer, extruder, or kneader.

Following mixing, the film composition may be formed into a (e.g. cast) film using known filmforming techniques, taking in to consideration the scale of the process and available equipment. In some embodiments, the PLA-based film composition is transferred to a press and then compressed and solidified to form individual sheets of PLA film. In other embodiments, the PLA-based film composition may be extruded through a die onto a casting roll maintained at a suitable cooling temperature to form a continuous length of PLA-based film. In some embodiments, during the film extrusion, the casting roll temperature is maintained preferably at 80 to 120°C to obtain crystallization of PLA films on the casting roll.

The PLA-based film can be annealed. The annealing conditions can vary, ranging from 120°F for about 12 hours to 200°F for about 20 minutes. In some embodiments, the storage and/or transport environment of the film provides sufficient annealing.

The PLA-based films described herein can be used in a variety of products. In some embodiments, the PLA film has similar or even better properties to polyvinyl chloride (PVC) film, and thus can be used in place of PVC films. Thus, the film and articles described here can be free of polyvinyl chloride (PVC) film as well as phthalate plasticizers.

The film and film compositions can have various properties, as determined by the test methods set forth in the examples.

The film generally has a glass transition temperature ranging from about -20°C, -15°C, or -10°C to 40°C; below the Tg of both the PLA polymer and the second (e.g. polyvinyl acetate) polymer. In some embodiments, the film has a

glass transition temperature of at least -5, -4, -3, -2, -1 or 0°C. In some embodiments, the film has a glass transition temperature of less than 35°C or 30°C or 25°C. In some embodiments, the film has a glass transition temperature of less than 20°C, 19°C, or 18°C.

The film typically has a melting temperature, $T_{m1}$ or $T_{m2}$, ranging from of at least about 150°C or 155°C to about 165°C, 170°C, 175 °C, or 180 °C. Further, the film composition can have a crystallization peak temperature Tc ranging from 100°C to 120°C.

The net melting endotherm is the energy of the melting endotherm less the energy of the crystallization exotherm (as described in further detail in the forthcoming examples). The net melting endotherm of the film compositions (i.e. taken from the microcompounder that are not melt pressed into a film) is determined by the second heating scan; whereas the net melting endotherm of the (e.g. melt pressed) film is determined by the first heating scan. According to US Patent 6,005,068, a PLA film is considered to be amorphous if it exhibits a net melting endotherm of less than about 10 J/g. In favored embodiments, such as when the film comprises a nucleating agent, the net melt enthalpy of the film, $\Delta H_{nm2}$ and $\Delta H_{nm1}$, respectively, is greater than 10, 11, 12, 13, 14 or 15 J/g and less than 40, 39, 38, 37, 36 or 35 J/g.

In one embodiment the film has a Tg from -10 to 30°C and a net melting endotherm, $\Delta H_{nm1}$, greater than 10 J/g and less than 40 J/g, as just described. Such films are flexible at room temperature and possess relatively high mechanical properties, such as modulus, upon heating to elevated temperatures as shown by the dynamical mechanical analysis (DMA) results in FIG 3. In this embodiment, the film has a tensile storage modulus of at least 10 MPa and typically less than 10,000 MPa for a temperature range of - 40°C to 125°C when heated at a rate of 2°C/min (i.e. the tensile storage modulus does not drop below 10 MPa when heated from -40 to 125°C when heated at a rate of 2°C/min). In some embodiments, the film has a tensile storage modulus as determine by dynamic mechanical analysis of at least 5, 6, 7, 8, 9, or 10 MPa for a temperature range of 25°C to 80°C when heated at a rate of 2 C°/min. In contrast, as shown in FIG 4, when the film has very low net melting endotherm, a dramatic decrease of mechanical properties, such as modulus, occurred as the temperature was increased above room temperature, 23°C.

The film can be evaluated utilizing standard tensile testing as further described in the forthcoming examples. The tensile strength of the film is typically at least 5 or 10 MPa and typically less than the tensile strength of the PLA and second (e.g. polyvinyl acetate) polymer utilized to make the film. In some embodiments, the tensile strength is no greater than 45, 40, 35, 34, 33, 32, 31, or 30 MPa. The elongation of the film is typically greater than that of PLA and second (e.g. polyvinyl acetate) polymer utilized to make the film. In some embodiments, the elongation is at least 30, 40 or 50%. In other embodiments, the elongation is at least 100%, 150% 200%, 250% or 300%. In some embodiments, the elongation is no greater than 600% or 500%. The tensile modulus of the film is typically at least 50, 100, or 150 MPa. In some embodiments, the tensile modulus is at least 200, 250 or 300MPa. In some embodiments, the tensile modulus is no greater than 1000 MPa, 750 MPa or 650 MPa.

In some embodiments, the PLA-based film described herein is transparent, i.e. having a transmission of visible light of at least 90 percent. In other embodiments, PLA-based film is opaque (e.g. white) or reflective and typically utilized as a backing or intermediate layer.

The PLA-based film described herein is suitable for use as any layer such as a backing, intermediate layer (i.e. a layer between the outermost layers), or a (e.g. transparent) cover film of a (e.g. pressure sensitive) adhesive tape or sheet. In one embodiment, both the PLA-based film and the (e.g. pressure sensitive) adhesive tape are transparent.

The PLA-based film may be subjected to customary surface treatments for better adhesion with the adjacent pressure sensitive adhesive layer. Surface treatments include for example exposure to ozone, exposure to flame, exposure to a high-voltage electric shock, treatment with ionizing radiation, and other chemical or physical oxidation treatments. Chemical surface treatments include primers. Examples of suitable primers include chlorinated polyolefins, polyamides, and modified polymers disclosed in U.S. Pat. Nos. 5,677,376, 5,623,010 and those disclosed in WO 98/15601 and WO 99/03907, and other modified acrylic polymers. In one embodiment, the primer is an organic solvent based primer comprising acrylate polymer, chlorinated polyolefin, and epoxy resin as available from 3M Company as "3M™ Primer 94".

Various (e.g. pressure sensitive) adhesives can be applied to the PLA-based film such as natural or synthetic rubber-based pressure sensitive adhesives, acrylic pressure sensitive adhesives, vinyl alkyl ether pressure sensitive adhesives, silicone pressure sensitive adhesives, polyester pressure sensitive adhesives, polyamide pressure sensitive adhesives, poly-alpha-olefins, polyurethane pressure sensitive adhesives, and styrenic block copolymer based pressure sensitive adhesives. Pressure sensitive adhesives generally have a storage modulus (E') as can be measured by Dynamic Mechanical Analysis at room temperature (25°C) of less than 3 x $10^6$ dynes/cm at a frequency of 1 Hz.

In certain embodiments, the pressure-sensitive adhesive may be natural-rubber-based, meaning that a natural rubber elastomer or elastomers make up at least about 20 wt. % of the elastomeric components of the adhesive (not including any filler, tackifying resin, etc.). In further embodiments, the natural rubber elastomer makes up at least about 50 wt. %, or at least about 80 wt. %, of the elastomeric components of the adhesive. In some embodiments, the natural rubber elastomer may be blended with one or more block copolymer thermoplastic elastomers (e.g., of the general type available under the trade designation KRATON from Kraton Polymers, Houston, TX). In specific embodiments, the

natural rubber elastomer may be blended with a styrene-isoprene radial block copolymer), in combination with natural rubber elastomer, along with at least one tackifying resin. Adhesive compositions of this type are disclosed in further detail in US Patent Application Publication 2003/0215628 to Ma et al..

The pressure sensitive adhesives may be organic solvent-based, a water-based emulsion, hot melt (e.g. such as described in US 6,294,249), heat activatable, as well as an actinic radiation (e.g. e-beam, ultraviolet) curable pressure sensitive adhesive. The heat activatable adhesives can be prepared from the same classes as previously described for the pressure sensitive adhesive. However, the components and concentrations thereof are selected such that the adhesive is heat activatable, rather than pressure sensitive, or a combination thereof.

In some embodiments, the adhesive layer is a repositionable adhesive layer. The term "repositionable" refers to the ability to be, at least initially, repeatedly adhered to and removed from a substrate without substantial loss of adhesion capability. A repositionable adhesive usually has a peel strength, at least initially, to the substrate surface lower than that for a conventional aggressively tacky PSA. Suitable repositionable adhesives include the adhesive types used on CONTROLTAC Plus Film brand and on SCOTCHLITE Plus

Sheeting brand, both made by Minnesota Mining and Manufacturing Company, St. Paul, Minnesota, USA.

The adhesive layer may also be a structured adhesive layer or an adhesive layer having at least one microstructured surface. Upon application of film article comprising such a structured adhesive layer to a substrate surface, a network of channels or the like exists between the film article and the substrate surface. The presence of such channels or the like allows air to pass laterally through the adhesive layer and thus allows air to escape from beneath the film article and the surface substrate during application.

Topologically structured adhesives may also be used to provide a repositionable adhesive. For example, relatively large scale embossing of an adhesive has been described to permanently reduce the pressure sensitive adhesive/substrate contact area and hence the bonding strength of the pressure sensitive adhesive. Various topologies include concave and convex V-grooves, diamonds, cups, hemispheres, cones, volcanoes and other three dimensional shapes all having top surface areas significantly smaller than the base surface of the adhesive layer. In general, these topologies provide adhesive sheets, films and tapes with lower peel adhesion values in comparison with smooth surfaced adhesive layers. In many cases, the topologically structured surface adhesives also display a slow build in adhesion with increasing contact time.

An adhesive layer having a microstructured adhesive surface may comprise a uniform distribution of adhesive or composite adhesive "pegs" over the functional portion of an adhesive surface and protruding outwardly from the adhesive surface. A film article comprising such an adhesive layer provides a sheet material that is repositionable when it is laid on a substrate surface (See U.S. Pat. No. 5,296,277). Such an adhesive layer also requires a coincident microstructured release liner to protect the adhesive pegs during storage and processing. The formation of the microstructured adhesive surface can be also achieved for example by coating the adhesive onto a release liner having a corresponding micro-embossed pattern or compressing the adhesive, e.g. a PSA, against a release liner having a corresponding micro-embossed pattern as described in WO 98/29516.

If desired, the adhesive layer may comprise multiple sub-layers of adhesives to give a combination adhesive layer assembly. For example, the adhesive layer may comprise a sub-layer of a hot-melt adhesive with a continuous or discontinuous overlayer of PSA or repositionable adhesive.

The acrylic pressure sensitive adhesives may be produced by free-radical polymerization technique such as solution polymerization, bulk polymerization, or emulsion polymerization. The acrylic polymer may be of any type such as a random copolymer, a block copolymer, or a graft polymer. The polymerization may employ any of polymerization initiators and chain-transfer agents generally used.

In some embodiments, the acrylic (e.g. pressure sensitive) adhesive comprises a syrup comprising i) a free-radically polymerizable solvent monomer; and ii) a solute (meth)acrylic polymer comprising polymerized units derived from one or more alkyl (meth)acrylate monomer. In typical embodiments, the syrup comprises at least one crosslinking monomer or the (meth)acrylic solute polymer comprises polymerized units derived from at least one crosslinking monomer.

An acrylic (e.g. pressure sensitive) adhesive article can be prepared by a) providing a syrup as just described b) applying the syrup to the PLA-based film described herein; and c) irradiating the applied syrup thereby crosslinking the adhesive composition. The resulting adhesive may be characterized as a radiation cured (e.g. pressure sensitive) adhesive.

The polymerization is preferably conducted in the absence of solvents such as ethyl acetate, toluene and tetrahydrofuran, which are non-reactive with the functional groups of the components of the syrup composition. Solvents influence the rate of incorporation of different monomers in the polymer chain and generally lead to lower molecular weights as the polymers gel or precipitate from solution. Thus, the (e.g. pressure sensitive) adhesive can be free of unpolymerizable organic solvent.

When the syrup is cured with UV radiation, the syrup further comprises photoinitiator Useful photoinitiators include benzoin ethers such as benzoin methyl ether and benzoin isopropyl ether; substituted acetophenones such as

2,2-dimethoxy-2-phenylacetophenone photoinitiator, available the trade name IRGACURE 651 or ESACUREKB-1 photoinitiator (Sartomer Co., West Chester, PA), and dimethylhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

The (e.g. pressure sensitive) adhesive (e.g. syrup) may be irradiated with activating UV radiation having a UVA maximum in the range of 280 to 425 nanometers to polymerize the monomer component(s). UV light sources can be of various types. Low light intensity sources, such as blacklights, generally provide intensities ranging from 0.1 or 0.5 $mW/cm^2$ (millwatts per square centimeter) to 10 $mW/cm^2$ (as measured in accordance with procedures approved by the United States National Institute of Standards and Technology as, for example, with a UVIMAP UM 365 L-S radiometer manufactured by Electronic Instrumentation & Technology, Inc., in Sterling, VA). High light intensity sources generally provide intensities greater than 10, 15, or 20 $mW/cm^2$ ranging up to 450 $mW/cm^2$ or greater. In some embodiments, high intensity light sources provide intensities up to 500, 600, 700, 800, 900 or 1000 $mW/cm^2$. UV light to polymerize the monomer component(s) can be provided by various light sources such as light emitting diodes (LEDs), blacklights, medium pressure mercury lamps, etc. or a combination thereof. The monomer component(s) can also be polymerized with higher intensity light sources as available from Fusion UV Systems Inc. The UV exposure time for polymerization and curing can vary depending on the intensity of the light source(s) used. For example, complete curing with a low intensity light course can be accomplished with an exposure time ranging from about 30 to 300 seconds; whereas complete curing with a high intensity light source can be accomplished with shorter exposure time ranging from about 5 to 20 seconds. Partial curing with a high intensity light source can typically be accomplished with exposure times ranging from about 2 seconds to about 5 or 10 seconds. The acrylic pressure sensitive adhesive comprises polymerized units of one or more (meth)acrylate ester monomers derived from a (e.g. non-tertiary) alcohol containing 1 to 14 carbon atoms and preferably an average of 4 to 12 carbon atoms. Examples of monomers include the esters of either acrylic acid or methacrylic acid with non-tertiary alcohols such as ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol; 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, and 1-tetradecanol.

The acrylic pressure sensitive adhesive comprises polymerized units of one or more low Tg (meth)acrylate monomers, i.e. a (meth)acrylate monomer when reacted to form a homopolymer has a $T_g$ no greater than 0°C. In some embodiments, the low Tg monomer has a $T_g$ no greater than -5°C, or no greater than -10°C. The Tg of these homopolymers is often greater than or equal to -80°C, greater than or equal to -70°C, greater than or equal to -60°C, or greater than or equal to -50°C.

The low Tg monomer may have the formula

$$H_2C=CR^1C(O)OR^8$$

wherein $R^1$ is H or methyl and $R^8$ is an alkyl with 1 to 22 carbons or a heteroalkyl with 2 to 20 carbons and 1 to 6 heteroatoms selected from oxygen or sulfur. The alkyl or heteroalkyl group can be linear, branched, cyclic, or a combination thereof.

Exemplary low Tg monomers include for example ethyl acrylate, n-propyl acrylate, n-butyl acrylate, isobutyl acrylate, t-butyl acrylate, n-pentyl acrylate, isoamyl acrylate, n-hexyl acrylate, 2-methylbutyl acrylate, 2-ethylhexyl acrylate, 4-methyl-2-pentyl acrylate, n-octyl acrylate, 2-octyl acrylate, isooctyl acrylate, isononyl acrylate, decyl acrylate, isodecyl acrylate, lauryl acrylate, isotridecyl acrylate, octadecyl acrylate, and dodecyl acrylate.

Low Tg heteroalkyl acrylate monomers include, but are not limited to, 2-methoxyethyl acrylate and 2-ethoxyethyl acrylate.

In typical embodiments, the acrylic pressure sensitive adhesive comprises polymerized units of at least one low Tg monomer(s) having an alkyl group with 6 to 20 carbon atoms. In some embodiments, the low Tg monomer has an alkyl group with 7 or 8 carbon atoms. Exemplary monomers include, but are not limited to, 2-ethylhexyl (meth)acrylate, isooctyl (meth)acrylate, n-octyl (meth)acrylate, isodecyl (meth)acrylate, lauryl (meth)acrylate, as well as esters of (meth)acrylic acid with an alcohol derived from a renewable source, such as 2-octyl (meth)acrylate.

The acrylic pressure sensitive adhesive typically comprises at least 50, 55, 60, 65, 70, 75, 80, 85, 90 wt-% or greater of polymerized units of monofunctional alkyl (meth)acrylate monomer having a Tg of less than 0°C, based on the total weight of the polymerized units (i.e. excluding inorganic filler or other additives).

The acrylic pressure sensitive adhesive may further comprise at least one high Tg monomer, i.e. a (meth)acrylate monomer when reacted to form a homopolymer has a Tg greater than 0°C. The high Tg monomer more typically has a Tg greater than 5°C, 10°C, 15°C, 20°C, 25°C, 30°C, 35°C, or 40°C. High Tg monofunctional alkyl (meth)acrylate monomers including for example, t-butyl acrylate, methyl methacrylate, ethyl methacrylate, isopropyl methacrylate, n-butyl methacrylate, isobutyl methacrylate, s-butyl methacrylate, t-butyl methacrylate, stearyl methacrylate, phenyl methacrylate, cyclohexyl methacrylate, isobornyl acrylate, isobornyl methacrylate, norbornyl (meth)acrylate, benzyl methacrylate, 3,3,5 trimethylcyclohexyl acrylate, cyclohexyl acrylate, N-octyl acrylamide, and propyl methacrylate or combinations.

The acrylic pressure sensitive adhesive may further comprise polymerized units of polar monomers. Representative polar monomers include for example acid-functional monomers (e.g. acrylic acid, methacrylic acid), hydroxyl functional (meth)acrylate) monomers, nitrogen-containing monomers (e.g. acrylamides), and combinations thereof. In some embodiments, the acrylic pressure sensitive adhesive comprises at least 0.5, 1, 2 or 3 wt-% and typically no greater than 10 wt-% of polymerized units of polar monomers, such as acrylamide and/or acid-functional monomers such as (meth)acrylic acid.

The pressure sensitive adhesive may further include one or more suitable additives according to necessity. The additives are exemplified by crosslinking agents (e.g. multifunctional (meth)acrylate crosslinkers (e.g. TMPTA), epoxy crosslinking agents, isocyanate crosslinking agents, melamine crosslinking agents, aziridine crosslinking agents, etc.), tackifiers (e.g., phenol modified terpenes and rosin esters such as glycerol esters of rosin and pentaerythritol esters of rosin, as well as C5 and C9 hydrocarbon tackifiers), thickeners, plasticizers, fillers, antioxidants, ultraviolet absorbers, antistatic agents, surfactants, leveling agents, colorants, flame retardants, and silane coupling agents.

In some embodiments, the (e.g. pressure sensitive) adhesive comprises a crosslinking monomer comprising a (meth)acrylate group and a $C_6$-$C_{20}$ olefin group, as described in WO2014/172185. The olefin group can be straight-chained, branched, or cyclic and optionally substituted. In some embodiments, the olefin group is a $C_6$-$C_{12}$ olefin group such as citronellyl (meth)acrylate, geraniol (meth)acrylate, farnesol (meth)acrylate, and undecenyl (meth)acrylate.

In another embodiment, the (e.g. pressure sensitive) adhesive comprises a crosslinking monomer comprising at least two terminal groups selected from allyl, methallyl, or combinations thereof as described in WO2015/157350.

The (e.g. pressure sensitive) adhesive layer may be disposed upon the film by various customary coating methods (e.g. gravure) roller coating, flow coating, dip coating, spin coating, spray coating, knife coating, (e.g. rotary or slit) die coating, (e.g. hot melt) extrusion coating, and printing. The adhesive may be applied directly to the PLA film described herein or transfer coated by use of release liner. When a release liner is used, the adhesive is either coated on the liner and laminated to the film or coated on the film and the release liner subsequently applied to the adhesive layer. The adhesive layer may be applied as a continuous layer, or a patterned, discontinuous layer. The adhesive layer typically has a thickness of about 5 to about 50 micrometers.

The release liner typically comprises paper or film, which has been coated or modified with compounds of low surface energy such as organosilicone compounds, fluoropolymers, polyurethanes and polyolefins. The release liner can also be a polymeric sheet produced from polyethylene, polypropylene, PVC, polyesters with or without the addition of adhesive-repellant compounds. As mentioned above, the release liner may have a microstructured or micro-embossed pattern for imparting a structure to the adhesive layer.

In some embodiments, the sheet or tape articles comprise a low adhesion backsize provided on first major side the PLA-backing, such that when the sheet or tape 1 is in roll, the outwardmost (exposed) surface of the pressure-sensitive adhesive comes in contact with the low adhesion backsize.

Various low adhesion backsize compositions have been described in the art such as, for example, silicone, polyethylene, polycarbamate, and polyacrylics.

The composition of low adhesion backsize is chosen (e.g., in combination with the composition of pressure-sensitive adhesive to provide an appropriate level of release. In some embodiments, the low adhesion backsize may also provide an enhanced ability to anchor paint which is deposited thereupon, just as described in US 2014/0138025.

General categories of exemplary materials which may be suitable for inclusion in low adhesion backsize include e.g. (meth)acrylic polymers, urethane polymers, vinyl ester polymers, vinyl carbamate polymers, fluorine-containing polymers, silicone-containing polymers, and combinations thereof.

In some embodiments, the low adhesion backsize is an organic solvent-based solution or a water-based emulsion.

In some embodiments, low adhesion backsize may comprises an acrylic composition that may be prepared from the same (meth)acrylate monomers as the acrylic adhesive. However, the low adhesion backsize composition typically comprises a lower concentration of low Tg monomer, such as octadecyl acrylate and a higher amount of high Tg monomer such as acrylic acid. In some embodiments, the low adhesion backsize comprises at least 40, 45 or 50 wt.-% ranging up to about 60 wt-% of polymerized units of low Tg monomer such as octadecyl acrylate. The weight percentages in connection with the low adhesion backsize described herein are with respect to the total solids not including any organic or aqueous solvent unless otherwise noted.

Such compositions are described in further detail in U.S. Patent 3,011,988 to Luedke et al..

In some embodiments, low adhesion backsize may comprise a discernable crystalline melting point ($T_m$), e.g. in compositions comprising appreciable quantities of monomer units which give rise to crystalline polymer segments. Such a $T_m$ may be present instead of, or along with, a $T_g$. In some embodiments, a $T_m$, if present, may range between e.g. 20°C and 60°C.

In some embodiments, low adhesion backsize may include at least some (meth)acrylic acid groups. In some

embodiments, concentration of (meth)acrylic acid groups is at least 2, 3, 4, or 5 wt.-% ranging up to 10, 15, or 20 wt.-%.

In some embodiments, low adhesion backsize may comprise a silicone-containing material. In various embodiments, such materials may comprise a silicone backbone with non-silicone (e.g., (meth)acrylate) side chains; a non-silicone (e.g., (meth)acrylate) backbone with silicone side chains; or a copolymer backbone comprising silicone units and non-silicone (e.g., (meth)acrylate) units. Silicone-polyurea materials, silicone-polyurea-polyurethane materials, silicone-polyoxamide materials, and siloxane-iniferter-derived compositions may also be suitable.

In a certain embodiments, the silicone-containing material of low adhesion backsize comprises a reaction product of a vinyl-functional silicone macromer having the general formula of Formula I:

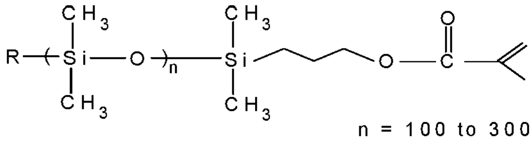

n = 100 to 300,

Formula I

and R is H or an alkyl group;

In certain embodiments, the silicone-containing material of low adhesion backsize comprises a reaction product of a mercapto-functional silicone macromer having the general formula of Formula IIa, IIb, or IIc or mixtures thereof:

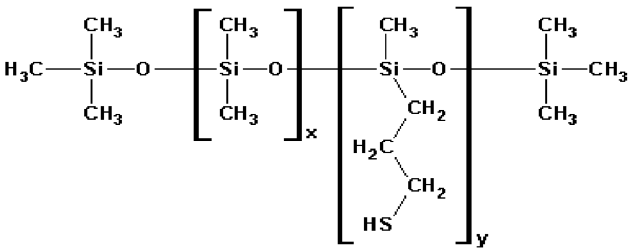

x = 20-1000 and y = 1-10;

Formula IIa

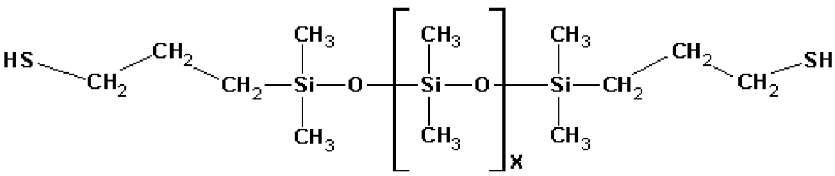

x = 20-1000;

Formula IIb

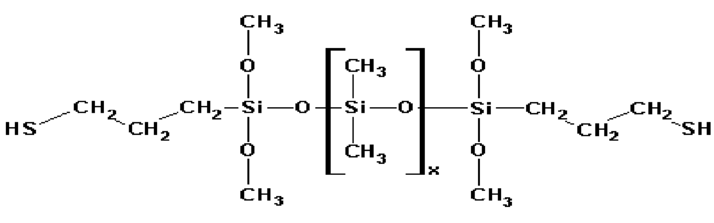

x = 20-1000

Formula IIc

Further details of mercapto-functional silicone macromers and of the production of low adhesion backsize compositions using such macromers can be found in U.S. Patent 5,032,460 to Kantner et al.

In various embodiments, any of the above silicone macromers may be used in combination with meth(acrylic)

monomers and/or with any other vinyl monomers. Such monomers may be chosen, for example, in order to achieve any of the above-discussed glass transition temperature ranges. In some embodiments, the silicone macromer (e.g. of Formula IIa) may be used, at approximately 15-35 weight percent of the total reactants, with the balance of the reactants including at least one high $T_g$ (meth)acrylic monomer, at least one low $T_g$ (meth)acrylic monomer, and at least one (meth) acrylic acid monomer. In specific embodiments, the low $T_g$ monomer is methyl acrylate, the high $T_g$ monomer is methyl methacrylate, and the (meth)acrylic acid monomer is methacrylic acid. In further embodiments, in such compositions the silicone macromer (e.g. of Formula IIa) is used at approximately 20-30 wt. %.

In some embodiments comprising silicone macromers, the low adhesion backsize comprises at least 2, 3, 4, or 5 wt.-% of (meth)acrylic acid groups ranging up to 10, 15 or 20 wt.-%.

The components of pressure-sensitive adhesive and the low adhesion backsize when present are typically chosen so as to provide good adhesion to a surface, while also being removable under moderate force without leaving a (e.g. visible) residue.

In some embodiments, the film described herein may be disposed upon or bonded (e.g. with an adhesive) to a second layer such as a second backing. The second backing may be disposed between the adhesive and the PLA-based film and/or the second backing may be disposed on the opposite major surface of the PLA-based film.

The backing can comprise a variety of flexible and inflexible (e.g. preformed web) substrates including but not limited to polymeric films, metal foils, foams, paper, and combinations thereof (e.g. metalized polymeric film). Polymeric films include for example polyolefins such as polypropylene (e.g. biaxially oriented), polyethylene (e.g. high density or low density), polyvinyl chloride, polyurethane, polyester (polyethylene terephthalate), polycarbonate, polymethyl(meth)acrylate (PMMA), polyvinylbutyral, polyimide, polyamide, fluoropolymer, cellulose acetate, cellulose triacetate, ethyl cellulose, as well as bio-based material such as polylactic acid (PLA).

In another embodiment, the PLA-based film or backing may further comprise a metal or metal oxide layer. Examples of metals include aluminum, silicon, magnesium, palladium, zinc, tin, nickel, silver, copper, gold, indium, stainless steel, chromium, titanium, and so on. Examples of metal oxides used in the metal oxide layer include aluminum oxide, zinc oxide, antimony oxide, indium oxide, calcium oxide, cadmium oxide, silver oxide, gold oxide, chromium oxide, silicon oxide, cobalt oxide, zirconium oxide, tin oxide, titanium oxide, iron oxide, copper oxide, nickel oxide, platinum oxide, palladium oxide, bismuth oxide, magnesium oxide, manganese oxide, molybdenum oxide, vanadium oxide, barium oxide, and so on. These metals and metal oxides may be used singly or in combination of two or more. Layers of these metals and/or metal oxides can be formed by known methods such as vacuum deposition, ion plating, sputtering, and CVD (Chemical Vapor Deposition). The thickness of the metal and/or metal oxide layer is typically at least 5 nm ranging up to 100 or 250 nm.

The thickness of the backing is typically at least 10, 15, 20, or 25 microns (1 mil) and typically no greater than 500 microns (20 mil) thickness. In some embodiments, the thickness of the backing is no greater than 400, 300, 200, or 100 microns. The backing as well as the overall film is typically in the form of a roll-good, but may also be in the form of individual sheets.

In some embodiments, the second (e.g. backing) layer is a thermoplastic polymer such as polycarbonate, polyethylene terephthalate, polyamide, polyethylene, polypropylene, polystyrene, polyvinyl chloride, poly(meth)acrylic polymers, and ABS (acrylonitrile-butadiene-styrene copolymer) resins. In some embodiments, the second backing is a transparent film having a transmission of visible light of at least 90 percent.

In some embodiments, the film and/or second backing is conformable. By "conformable" it is meant that the film or film layer is sufficiently soft and flexible such that it accommodates curves, depressions, or projections on a substrate surface so that the film may be stretched around curves or projections, or may be pressed down into depressions without breaking or delaminating the film. It is also desirable that the film does not delaminate or release from the substrate surface after application (known as popping-up).

Suitable conformable second backings include, for example, polyvinyl chloride (PVC), plasticized polyvinyl chloride, polyurethane, polyethylene, polypropylene, and fluoropolymer. Other polymer blends are also potentially suitable, including for example thermoplastic polyurethane and a cellulose ester.

In some embodiments, the film is sufficiently conformable such that it is "transversely curvable" meaning that the tape can be curved into a continuous curved shape (e.g. with a radius of curvature of 7.5 cm) that lies in a generally flat plane, without through-tearing of the stretched area of the curved portion of the tape. An example of a transversely curvable tape is depicted in Fig. 15 of US2014/0138025.

The adhesive coated articles can exhibit good adhesion to both smooth and rough surfaces. Various rough surfaces are known including for example textured drywall, such as "knock down" and "orange peel"; cinder block, rough (e.g. Brazilian) tile and textured cement. Smooth surfaces, such as stainless steel, glass, and polypropylene have an average surface roughness (Ra) as can be measured by optical inferometry of less than 100 nanometer; whereas rough surfaces have an average surface roughness greater than 1 micron (1000 nanometers), 5 microns, or 10 microns. Sealed cement can have a rough or smooth surface depending on the thickness of the sealer. Cement sealers typically comprise polyurethane, epoxy resin, sodium silicate, or methylmethacrylate.

The tape or sheet article herein can be utilized for various end uses such as lane and safety markings, color coding, abrasion protection, masking, sealing, splicing, etc.

In some embodiments, the article is a (e.g. paint) masking tape or sheet. Such tape can be applied to a desired portion of a surface, adjacent portions of surfaces can then be painted as desired (the term paint is used broadly herein and encompasses any coating, primer, varnish, and lacquer). At any suitable time (e.g., after the paint has dried to a desired extent), the tape can then be removed from the surface. In some embodiments, the composition of low adhesion backsize can be chosen to enhance the ability of tape 1 to retain and anchor liquid paint, such as might be applied with a sprayer, brush, roller, etc. Such paint may be e.g. latex or oil-based such as described in US2014/0138025.

In another embodiment, the article is a floor marking tape that is typically adhered to (e.g. sealed) cement or other flooring surface. The floor marking tape comprising the PLA-backing described here was found to retain its position after 7 weeks of testing according to the Position Retention Test (described in greater detail in the forthcoming examples). The tape comprising the PLA-backing has comparable position retention to commercially available tapes comprising a polyvinyl chloride-based backing.

The following Examples are set forth to describe additional features and embodiments of the invention. All parts are by weight unless otherwise indicated.

## Materials

PLA, Ingeo 4032D ("4032") and Ingeo 4060D ("4060"), were purchased from Natureworks, LLC. The polyvinyl acetate "PVAc" was obtained from Wacker as the trade designation "Vinnapas™ UW 4 FS". Ecopromote nucleation agent was obtained from Nissan Chemical Industrials (Japan).Sukano PLA DC S511 slip/anti-block masterbatch and Sukano PLA CC S513 $TiO_2$ masterbatch were obtained from Sukano Polymers (USA).

Commercially available plasticizers utilized include Citroflex A4 (Vertellus Performance Materials), PEG 400 di-ethylhexonate and tetraethylene glycol di-ethylhexonate ester plasticizers available from Hallstar under the respective trade designation "TegMer 809" and "TegMer 804", polyester plasticizer (3200 molecular weight polymeric adipate) available from Eastman under the trade designation "Admex 6995".

## Sample Preparation- Melt Compounding

Samples were prepared by mixing PLA, PVAc, plasticizer and nucleation agent in a DSM Xplore™ 15 $cm^3$ twin-screw micro-compounder at 100 RPM, 200°C for 10 minutes, and then collecting the sample by opening a valve on the mixing chamber. The compounded samples were subjected to aging testing at 80°C, DSC characterization and melt-pressed into films for tensile testing.

## Aging Test

The compounded samples (0.2 grams) were placed in the closed scintillation vials to prevent plasticizer evaporation during aging testing, and aged in the oven at 80°C for 24 hours. Then, after aging at 80°C, the sample's surface was inspected to see if there was plasticizer migration. Samples having a wet or oily surface were considered to fail; whereas samples having a dry surface were considered to pass.

## DSC - Differential Scanning Calorimetry

The glass transition temperature, crystallization temperature, melting temperature, etc. of each sample was measured using a TA Instruments Differential Scanning Calorimeter according to ASTM D3418-12 unless specified otherwise. Each sample (4~8 mg) was heated from -60 to 200°C at 10°C/min in a first heating scan and held for 2 minutes to erase its thermal history, then cooled to -60°C at 10°C/min in a first cooling scan, and heated to 200°C at 10°C/min in a second heating scan. The second heating scan was used to determine Tg of the compositions and films. Various parameters were derived from the DSC as defined as follows:

$T_g$ - refers to the midpoint temperature of the second heating scan, described as $T_{mg}$ in ASTM D3418-12.

$T_c$ - refers to the crystallization peak temperature of the first cooling scan, described as $T_{pc}$ in ASTM D3418-12.

$T_{m1}$ and $T_{m2}$ - refer to the melting peak temperature of the first and second heating scan, respectively, described as $T_{pm}$ in ASTM D3418-12.

The ability of the composition to crystallize was determined by calculating the net melting endotherm, $\Delta H_{nm2}$,

associated with the crystalline material formed during the second cooling scan was calculated with the following equation,

$$\Delta H_{nm2} = \Delta H_{m2} - \Delta H_{cc2}$$

where $\Delta H_{m2}$ is the melting endotherm mass normalized enthalpy of the second heating scan and $\Delta H_{cc2}$ is the crystallization exotherm mass normalized enthalpy of the second heating scan (as described in section 11 of ASTM D3418-12). For the compositions comprising nucleating agent, $\Delta Hcc_2$ was not detected and thus $\Delta H_{nm2} = \Delta H_{m2}$.

The net melting endotherm, $\Delta H_{nm1}$, is associated with the crystallinity in the films (e.g. prepared by melt press). The $\Delta H_{nm1}$ was calculated with the following equation,

$$\Delta H_{nm1} = \Delta H_{m1} - \Delta H_{cc1}$$

where $\Delta H_{m1}$ is the melting endotherm mass normalized enthalpy of the first heating scan and $\Delta H_{cc1}$ is the crystallization exotherm mass normalized enthalpy of the first heating scan (as described in section 11 of ASTM D3418-12). For the films comprising nucleating agent, $\Delta H_{cc1}$ was not detected and thus $\Delta H_{nm1} = \Delta H_{m1}$.

The absolute values of the enthalpies associated with the exotherms and endotherms (i.e. $\Delta H_{m1}$, $\Delta H_{m2}$, $\Delta H_{cc1}$, and $\Delta H_{cc2}$ were used in the calculations.

## Melt press

The compounded samples were placed between two Teflon sheets with a 10 mil thick spacer in between. The Teflon sheets were placed between to metal sheets. The metal sheets with the sample disposed between were placed between the platens of a hydraulic press (available from Carver) and the platens were heated to 340°F. Each sample was preheated for 8 minutes without pressure and then pressed under a pressure of 300 pounds per square inch for 5 minutes. Then, the metal plates were removed from the Carver press and allowed for air cooling. The melt-pressed films were subject to DSC characterization and tensile testing.

## Tensile Testing

The melt pressed samples were cut into 0.5 inch wide strips. The tensile testing was conducted at room temperature using Instron 4501 Tensile Tester. The initial grip distance was at 1 inch and the tensile speed was at 1 inch/min or 100% strain/min. Test results were reported as the average of 3-5 sample replicates. The tensile strength (nominal), modulus and percent elongation at break were determined, as described by 11.3 and 11.5 of ASTM D882-10.

## Dynamic Mechanical Analysis (DMA)

Dynamic Mechanical Analysis (DMA) was conducted utilizing a film tension fixture available from TA Instruments as "DMA Q800" to characterize the physical properties of the films as a function of temperature. The samples were heated from -40°C temperature to 140°C at a rate of 2°C/minute, a frequency of 1 radian/second and a tensile strain of 0.1%.

## 180 degree Peel Strength Test Method

A 0.5 inch (~1.3 cm) wide by 6 inch (~15 cm) long strip of adhesive was laminated onto a stainless steel panel using a roller. Dwell time was 10 minutes in the CTH (constant temperature and humidity) room conditioned at 23°C/50% RH. Peel strength measurements are made using a 180 degree peel mode at 12 in/min (~30 cm/min.). Data were recorded as an average of 6 measurements.

The wt.-% of each of the components utilized in the compositions of the examples and control examples (indicated by the "C") is given in Table 1. For example Example 8 contains 70 wt.-% of PLA4032, 15 wt.-% of PVAc, 15 wt.-% of Citroflex A4, based on the total weight of polylactic acid polymer, polyvinyl aceate polymer, and plasticizer. Example 8 further contained 0.2 wt.-% of Ecopromote based on the total weight of the composition. The Tg and aging results of the compositions is also reported in Table 1 as follows:

Table 1

| Example | Components | wt% of component | $T_g$ (°C) | Aging at 80°C for 24 hrs |
|---|---|---|---|---|
| C1 | PLA4032/Admex6995 | 89/11 | 46 | Pass |
| C2 | PLA4032/Admex6995 | 85/14 | 39 | Fail |
| C3 | PLA4032/Admex6995 | 82/18 | 37 | Fail |
| C4 | PLA4032/CitroflexA4/ Ecopromote | 90/10/0.2 | 32 | Pass |
| C5 | PLA4032/CitroflexA4/ Ecopromote | 86/14/0.2 | 25 | Pass |
| C6 | PLA4032/CitroflexA4/ Ecopromote | 85/15/0.2 | 21 | Fail |
| C7 | PLA4032/CitroflexA4/ Ecopromote | 83/17/0.2 | 15 | Fail |
| 8 | PLA4032/PVAc/CitroflexA4/ Ecopromote | 70/15/15/0.2 | 15 | Pass |
| 9 | PLA4032/PVAc/CitroflexA4/ Ecopromote | 67/16/16/1 | 10 | Pass |
| 10 | PLA4032/PVAc/CitroflexA4/ Ecopromote | 65/20/15/0.2 | 17 | Pass |
| 11 | PLA4032/PVAc/CitroflexA4/ Ecopromote | 60/25/15/0.2 | 11 | Pass |
| 12 | PLA4032/PVAc/CitroflexA4/ Ecopromote | 50/35/15/0.1 | 5 | Pass |
| 13 | PLA4032/PVAc/TegMer809/ Ecopromote | 60/28/12/0.2 | 13 | Pass |
| 14 | PLA4032/PVAc/TegMer809/ Ecopromote | 53/35/12/0.2 | 9 | Pass |

As illustrated by Table 1, Comparative Examples C1, C4 and C5 passed the aging test, yet Comparative Examples C2, C3, C6 and C7 failed the aging test. The Tg of the sample can be lowered to 25°C (as illustrated by Comparative C5), but not below 25°C yet still pass the aging test (as illustrated by Comparative Examples C6 and C7). When the composition included PLA, plasticizer and PVAc, the Tg can be reduced below 25°C and pass the aging test.

The wt.-% of each of the components utilized in the compositions of the examples (where examples 16, 19 and 20 are reference examples not according to the claimed invention (indicated by the "R")), and control examples (indicated by the "C"), the DSC results are depicted in Table 2 as follows:

Table 2

| Ex. | Components (wt.-% of components) | $T_c$ (°C) | $T_{m2}$ (°C) | $T_g$ (°C) | $\Delta H_{nm2}$ (J/g) |
|---|---|---|---|---|---|
| C15 | PLA/Ecoromote (100/0.2) | 125 | 167 | 63 | 42.9 |
| C4 | PLA4032/CitroflexA4/ Ecopromote (90/10/0.2) | 122 | 162 | 36 | 41.4 |
| C5 | PLA4032/CitroflexA4/ Ecopromote (86/14/0.2) | 120 | 160 | 25 | 40.1 |
| 8 | PLA4032/PVAc/CitroflexA4 Ecopromote (70/15/15/0.2) | 117 | 165 | 14 | 33.5 |
| 9 | PLA4032/PVAc/CitroflexA4/Ecoprom ote (67/16/16/1) | 119 | 163 | 10 | 32.5 |
| 10 | PLA4032/PVAc/CitroflexA4 Ecopromote (65/20/15/0.2) | 117 | 165 | 17 | 31.3 |
| 11 | PLA4032/PVAc/CitroflexA4 Ecopromote (60/25/15/0.2) | 115 | 164 | 13 | 29.4 |
| 12 | PLA4032/PVAc/CitroflexA4 Ecopromote (50/35/15/0.1) | 112 | 160 | 5 | 23.8 |
| 13 | PLA4032/PVAc/TegMer809 Ecopromote (60/28/12/0.2) | 120 | 165 | 13 | 28.4 |
| 14 | PLA4032/PVAc/TegMer809 Ecopromote (53/35/12/0.2) | 118 | 164 | 9 | 26.2 |
| R16 | PLA4032/PVAc/CitroflexA4 (50/35/15) as melt pressed | - | 160 | 27 | 1.5 |
| 17 | PLA4032/PVAc/CitroflexA4/ Ecopromote (44.8/35/20/0.2) | 112 | 160 | 2 | 23.0 |
| 18 | PLA4032/PVAc/CitroflexA4/ Ecopromote (39.8/35/25/0.2) | 109 | 158 | -8 | 20.9 |
| R19 | PLA4032/PLA4060/PVAc/ CitroflexA4/Ecopromote (20/34/35/10/1) | 107 | 161 | 27 | 13.2 |
| R20 | PLA4032/PLA4060/PVAc/ CitroflexA4/Ecopromote (15/50/20/14/1) | 104 | 161 | 28 | 10.5 |
| 21 | PLA4032/PLA4060/PVAc/ TegMer804/Ecopromote (20/34/35/10/1) | 112 | 162 | 22 | 14.5 |

A representative DSC profile of the composition of Example 12 is depicted in Figure 1. This DSC profile exhibits a sharp crystallization peak exotherm during cooling. The composition of Example 16 didn't exhibit any crystallization during cooling, as depicted in Figure 2.

The wt.-% of each of the components utilized in the compositions to prepare the melt-pressed film examples and control examples (indicated by the "C"), the DSC and tensile testing results of these films are depicted in Table 3 as follows:

Table 3

| Ex. | Components (wt.-% of components) | $T_{m1}$ (°C) | $\Delta H_{nm1}$ (J/g) | Tensile Strength (MPa) | Tensile Elongation | Tensile Modulus (MPa) |
|---|---|---|---|---|---|---|
| | Plasticized PVC (RG 180-10) $T_g$ = 15°C | 160 | N/A | 24 | 200% | 500 |
| | LPDE (DOW 525E) $T_g$ = -60°C | 120 | N/A | 17 | 490% | 270 |
| | PVAc $T_g$ = 43°C | - | N/A | 34 | 7% | 3000 |
| | PLA4032 $T_g$ = 63°C | 167 | N/A | 60 | 6% | 3500 |
| C4 | PLA 4032/CitroflexA4/ Ecopromote (90/10/0.2) | 168 | 49.6 | 30.3 | 23% | 890 |
| C5 | PLA 4032/CitroflexA4/ Ecopromote (86/14/0.2) | 165 | 36.5 | 24.9 | 28% | 650 |
| 8 | PLA4032/PVAc/ CitroflexA4/Ecopromote (70/15/15/0.2) | 164 | 34.2 | 21.6 | 86% | 390 |
| 10 | PLA4032/PVAc/ CitroflexA4/Ecopromote (65/20/15/0.2) | 162 | 29.7 | 27.3 | 349% | 371 |
| 11 | PLA4032/PVAc/ CitroflexA4/Ecopromote (60/25/15/0.2) | 162 | 30.1 | 20.6 | 363% | 263 |
| 12 | PLA4032/PVAc/ CitroflexA4/Ecopromote (50/35/15/0.1) | 162 | 27.0 | 17.9 | 369% | 203 |
| 13 | PLA4032/PVAc/TegMer80 9/Ecopromote (60/28/12/0.2) | 164 | 31.4 | 21.9 | 320% | 328 |
| 14 | PLA4032/PVAc/TegMer80 9/Ecopromote (53/35/12/0.2) | 163 | 27.5 | 18.9 | 373% | 253 |
| R16 | PLA4032/PVAc/ CitroflexA4 (50/35/15) as melt pressed | 160 | 1.7 | 30.1 | 472% | 241 |
| 17 | PLA4032/PVAc/ CitroflexA4/Ecopromote (44.8/35/20/0.2) | 158 | 23.4 | 14.5 | 450% | 153 |
| 18 | PLA4032/PVAc/ CitroflexA4/Ecopromote (39.8/35/25/0.2) | 157 | 21.6 | 8.7 | 390% | 101 |
| R19 | PLA4032/PLA4060/ PVAc/CitroflexA4/ Ecopromote (20/34/35/10/1) | 161 | 14.1 | 26.3 | 302% | 613 |
| R20 | PLA4032/PLA4060/ PVAc/CitroflexA4/ Ecopromote (15/50/20/14/1) | 159 | 12.1 | 27.9 | 364% | 485 |
| 21 | PLA4032/PLA4060/ PVAc/TegMer804/ Ecopromote (20/34/35/10/1) | 161 | 14.2 | 25.4 | 380% | 416 |

The Tgs of the films of Table 3 were also measured by DSC and would to be the same as the compositions of Table 2. Examples 12 and 16 were tested according to the previously described Dynamic Mechanical Analysis. The results of Example 12 are depicted in FIG. 3 and the results of Example 16 are depicted in FIG. 4.

The previously describe films can be utilized in various adhesive-coated tape and sheet articles comprising the PLA film described herein (e.g. as a backing).

Example 22 (EX-22)

A piece of Example 17 film, containing 44.8 wt.-% of PLA4032, 35 wt.-% of PVAc, 20 wt.-% of Citroflex A4, and 0.2 wt.-% of Ecopromote, was overlaminted at room temperature with a 1 mil thick polyacrylate pressure sensitive adhesive, which was derived from 97 wt.-% of isooctyl acrylate and 3 wt.-% of acrylamide and had a weight-average molecular weight of about 1,000,000 g/mol. Subsequently, 180 degree peel strength (using 180 degree Peel Strength Test Method) was measured to be 25 oz/in (~27 N/dm). During the peel testing, the polyacrylate adhesive adhered well with the PLA-based backing and clean removal of the adhesive from stainless steel panel was observed.

The following Table 4 describes additional components utilized in the forthcoming examples.

TABLE 4

| Designation | Description | Source |
|---|---|---|
| PVAc | Polyvinyl acetate powder, available under the trade designation "VINAVIL K70" | Vinavil (Italy) |
| Antiblock Resin | An anti-blocking/anti-slipping agent provided in Ingeo PLA4032D at a loading level of 10-40 wt.% available under the trade designation "SUKANO DC S511" | Sukano AG (US) |
| MA | Methyl acrylate | Arkema Inc., Philadelphia, PA |
| MMA | Methyl Methacrylate | Lucite International, Japan |
| AA | Acrylic acid | Arkema Inc., Philadelphia, PA |
| IOA | Isooctyl acrylate | Sigma Aldrich, St. Louis, MO |
| 2-OA | 2-octyl acrylate | For preparation see U.S. Patent No. 7,385,020 (Anderson et al.) |
| MAA | Methacrylic acid | Dow Chemical, Midland, MI |
| IRGACURE 651 | A photoinitiator | Ciba/BASF, Hawthorne, NY |
| IRGACURE 1076 | A photoinitiator | Ciba/BASF, Hawthorne, NY |
| IOTG | isooctyl thioglycolate, a chain transfer agent | Ciba/BASF, Hawthorne, NY |
| KF-2001 | A mercapto-functional silicone macromer ($M_w$= 1000-15000) | Shin-Etsu Chemical Co, Tokyo, Japan |
| Crosslinker | Trimethylolpropane Triacrylate (TMPTA) Acrylic Ester with Scorch Retardant, available under the trade designation "SARET SR519HP" | Sartomer Americas, Exton, PA |
| Diatomaceous Earth Resin | Diatomaceous Earth provided in Ingeo PLA 4032D at a loading level of between 10 and 30 wt%. | Clariant Corporation, Minneapolis, MN |
| White Pigment Resin | Titanium dioxide masterbatch (50 wt% loading in Ingeo PLA 4032D) | Clariant Corporation, Minneapolis, MN |

Example 23 (EX-23): Preparation of PLA/PVAc film

A 25 mm twin-screw extruder was used for melt blending and cast film extrusion. The feeding of raw materials to the extruder. PLA4032 resin, ECOMPROMOTE masterbatch (20 wt% in PLA4032) and DCS511 were dry-blended together at a weight ratio of 33:1:1 (PLA4032: ECOPROMOTE: DCS511) and fed into Zone 1 of the extruder at the rate of 17.5 lbs/hr (~7.9 kg/hr). PVAc powder was fed at the rate of 3.75 lbs/hr (~1.7 kg/hr) into Zone 1 of the extruder, using a second feeder. CITROFLEX A4 plasticizer was fed at the rate of 3.75 lbs/hr (~1.7 kg/hr) into Zone 3 of the extruder. Vacuum (about 1 kPa to 2 kPa) was applied at Zone 4 of the extruder. The polymer melt was extruded through a slot die to form a film with a thickness of 2.5 mil (~64 millimeters). The film was quenched upon contact with a cast wheel having a temperature of 70°F (21°C), and then pass through a series of warm rolls having temperatures of 210°F to 220°F (99°C to 104°C) for annealing to achieve crystallization. The annealed film was cooled to around room temperature

(about 23°C to 25°C) before winding onto a 3 inch (~7.6 cm) diameter core to form a roll. The detailed extrusion conditions were as summarized in Table 5.

TABLE 5

<table>
<tr><td>Film composition</td><td colspan="6">PLA4032D/ECOPROMOTE/DCS511/ VINAVIL K70/CITROFLEXA4 (67.6/0.4/2/15/15 wt%)</td></tr>
<tr><td>Film thickness</td><td colspan="6">2.5 mil (~64 micrometers)</td></tr>
<tr><td>Total feed rate</td><td colspan="6">25 1b/hr (~11 kg/hr)</td></tr>
<tr><td>Line speed</td><td colspan="6">23 feet/min (~7 m/min)</td></tr>
<tr><td></td><td>Zone 1</td><td>Zone 2</td><td>Zone 3</td><td>Zone 4</td><td>Zone 5</td><td>Zone 6</td></tr>
<tr><td>Extruder temperature</td><td>250°F (~121°C)</td><td>390°F (~199°C)</td><td>390°F (~199°C)</td><td>350°F (~177°C)</td><td>350°F (~177°C)</td><td>350°F (~177°C)</td></tr>
<tr><td>Neck tube temperature</td><td colspan="6">350°F (~177°C)</td></tr>
<tr><td>Die temperature</td><td colspan="6">350°F (~177°C)</td></tr>
<tr><td>Screw speed</td><td colspan="6">200 RPM</td></tr>
<tr><td>Cast wheel temperature</td><td colspan="6">70°F (21°C)</td></tr>
<tr><td rowspan="2">Annealing roll temperature</td><td>Roll 1</td><td>Roll 2</td><td colspan="2">Roll 3</td><td>Roll 4</td><td>Roll 5</td></tr>
<tr><td>210°F (~99°C)</td><td>220°F (~104°C)</td><td colspan="2">220°F (~104°C)</td><td>220°F (~104°C)</td><td>220°F (~104°C)</td></tr>
</table>

The final composition contained:

| Components | Composition (wt.-%) |
|---|---|
| PLA - INGEO 4032D | 69 |
| PVAc - VINAVIL K70 | 15 |
| CITROFLEX A-4 PLASTICIZER | 15 |
| Nucleating Agent - ECOPROMOTE | 0.4 |

Example 24 (EX-24): Tape including PLA/PVAc film with layers of low adhesion backsize ("LAB"), primer and hot-melt adhesive

The PLA/PVAc film of EX-23 was made into tape rolls by applying a primer, a low adhesion backsize ("LAB") coating, and hot melt acrylic adhesive. Air corona treatment, using conventional methods and apparatus to a dyne level of about 50 dynes/$cm^2$, was used on both sides of the PLA/PVAc film of EX-23 to improve bonding of the primer and LAB.

For release properties, a solvent-based silicone acrylate low adhesive backsize (LAB) was used. The LAB was made from MA/MMA/MAA/KF-2001 in ratios of 60/10/5/25. The reaction was run in methyl ethyl ketone, using procedures generally similar to those described in Examples (e.g., the LAB-Si-R in Table 2) of U.S. Published Patent Application No. 2014/0138025. The LAB was applied to the PLA/PVAc film backing using a direct gravure roll at a usage rate of about 1.2 gallons/1000 sqyds (~5.4 liters/1000 $m^2$) and drying at 150°F (~66°C).

A primer layer (3M TAPE PRIMER 94) was applied to the PLA/PVAc film using a direct gravure roll at a usage rate of about 1.5 gallons/1000 sqyds (~6.8 liters/1000 $m^2$) and then drying at 150°F (66°C).

A hot melt acrylic PSA (comprising 98.25 parts by weight of IOA, 1.75 parts by weight of AA, 0.015 parts by weight of IOTG, 0.15 parts by weight of IRGACURE 651, and 0.04 parts by weight of IRGACURE 1076, prepared using the procedure generally similar to the description in Example 1 of U.S. Pat. No. 6,294,249) was coated over the primer side of the PLA film backing. The hot melt acrylic adhesive contained UV stabilizers, antioxidants, E-beam co-agents (scorch-retarded TMPTA), DOTP plasticizer, and tackifying resins in order to improve the performance of the masking tape. A twin screw extruder was used to blend the components and coat the hot melt acrylic adhesive mixture onto the PLA/PVAc film backing via rotary rod die at a coat weight of 9.5 grains per 24sqi (40 g/$m^2$). The coated adhesive was

irradiated with low voltage E-beam at dose of 4.0 Mrad to provide the cured tape of Example 24.

The coated PLA/PVAc backing was then converted into tape rolls via score slitting techniques.

Tensile Testing

The tensile testing on the tape of Example 24 (after addition of the above LAB, primer and adhesive coatings to the PLA/PVAc film) was conducted using INSTRON 3365. The initial grip distance was at 2 inches (~5.1 cm) and the tensile speed was at 2 inch/min (~5.1 cm/min). Test results were reported as the average of 3-5 sample replicates. The tensile strength (nominal), modulus and percent elongation at break were determined, as described by 11.3 and 11.5 of ASTM D882-10.

TABLE 6. Tensile properties of the PLA tape backing after LAB, primer and adhesive coatings

| Example | Tensile strength (MPa) | Tensile elongation | Tensile Modulus (MPa) |
|---|---|---|---|
| EX-24 | 32.8 | 169% | 662 |

180 degree Peel Strength Test Method

The PLA/PVAc tape of Example 24 was laminated onto a stainless steel panel using a 2 kg roller. Dwell time was 10 minutes in the CTH (constant temperature and humidity) room conditioned at 23°C/50% RH. Peel strength measurements were made using a 180 degree peel mode at 12 in/min (~30 cm/min.). Results were summarized as an average of 5 measurements.

The 180 degree peel strength of the PLA/PVAc tape against a stainless steel plate was measured to be 11 oz/in (~12 N/dm) During the peel testing, the polyacrylate adhesive adhered well to the PLA/PVAc tape backing, and clean removal of the adhesive from stainless steel panel was observed.

The PLA/PVAc tape (1 inch wide; ~2.5 cm wide) was conformable and could be satisfactorily transversely curved, for example as evidenced by being manually curved into a circle with a diameter of approximately 6 inch (15 cm) or in other words a radius of curvature of 3 inches (7.5 cm) while adhering well to a stainless steel plate.

Example 25 - Preparation of PLA / PVAc Film

A white-colored PLA/PVAc film having a thickness of approximately 0.029 inches (0.0737 cm) was prepared using similar extrusion conditions as described in EX-23. The film had the composition listed in Table 7:

TABLE 7

| Components | Composition (wt.-%) |
|---|---|
| PLA - INGEO 4032D | 45.6 |
| PVAc - VINAVIL K70 | 30 |
| CITROFLEX A-4 PLASTICIZER | 18 |
| Nucleating Agent - ECOPROMOTE | 0.4 |
| White Pigment Resin | 4 |
| Sukano DC S511 | 2 |

Preparation of Floor Marking Tape

A tackified, crosslinked, styrene-butadiene rubber-based pressure sensitive adhesive (PSA) was solvent coated onto a release liner, dried, and then laminated at room temperature and a pressure of 20 pounds/square inch (138 KiloPascals) to the one side of the previously prepared PLA-based film described above. The resulting tape article had, in order, a release liner, a styrene-butadiene rubber-based PSA having an approximate thickness of 0.002 inches (51 micrometers), and a PLA-based backing.

Position Retention Test

A section of worn sealed concrete industrial floor was swept clean of debris and cleaned with a cloth and

isopropyl alcohol solution. A 2 inch (5.1 centimeters) wide by 18 inch (45.7 centimeters) long sample of tape was applied to the floor perpendicular to the wall. A permanent red colored marker was used to mark the floor along the longitudinal edges of the tape.

A position retention test was then run as follows. An electric fork lift weighing 1040 pounds (472 kilograms) carrying a 50 pound (22.7 kilogram) wooden pallet loaded with cardboard box filled with 1800 pounds (816.5 kilograms) of polyethylene resin was run over the floor marking tape back and forth over the tape 25 times in each direction. The forklift crossed the tape along its longitudinal edges. After completing the 50 total passes, the pallet was lowered to the floor and pushed over the tape one time with the forklift crossing the tape along its longitudinal edges. This was repeated once per week for 7 weeks.

Comparative Tape A a commercially available industrial floor marking tape having a width of two inches (5.1 centimeters) and a thickness of about 60 mils. This tape had a polyvinyl chloride backing and a rubber-based adhesive thereon. It was tested for its Position Retention property. The tape sample was found to retain its position even after seven weeks of testing.

Example 25

The floor marking tape prepared as described above was tested for its Position Retention property. The tape sample was found to retain its position even after seven weeks of testing.

Example 25 is believed to be a suitable replacement for Comparative Tape A.

Example 26 (EX-26): Preparation of PLA/PVAc film

A 25 mm twin-screw extruder was used for melt blending and cast film extrusion. The PLA4032 resin, ECOPROMOTE masterbatch (20 wt% in PLA4032) and SUKANO DC S511 slip/anti-block and SUKANO PLA CC S513 $TiO_2$ masterbatch were dry blended together and fed into Zone 1 of the extruder. Polyvinyl acetate powder was fed into Zone 1 of the extruder, using a second feeder. CITROFLEX A4 plasticizer was fed into Zone 3 of the extruder. The polymer melt was extruded through a slot die to form a film with a thickness of 4 mil (~102 micrometers). The film was quenched immediately upon contact with a cast wheel having a temperature of 70°F (21°C), and then pass through a series of warm rolls having temperatures of 225°F to 230°F (107°C to 110°C) for annealing to achieve crystallization. The annealed film was cooled to around room temperature before winding onto a core to form a roll. The detailed extrusion conditions were listed in Table 8.

TABLE 8. Film extrusion conditions

| | | | | | | |
|---|---|---|---|---|---|---|
| Film composition | INGEO 4032D/SUKANO PLA CC_S513 $TiO_2$/ ECOPROMOTE MA/SUKANO_DC_ S511/ VINNAPAS_UW 25/CITROFLEX A4 (41/10/2.5/2.5/30/14 wt%) | | | | | |
| Film thickness | 4 mil (~102 micrometers) | | | | | |
| Total feed rate | 20 1bs/hr (~9.1 kg/hr) | | | | | |
| Line speed | 11 feet/min (~3.4 meters/min) | | | | | |
| Extruder temperature | Zone 1 | Zone 2 | Zone 3 | Zone 4 | Zone 5 | Zone 6 |
| | 250°F (~121°C) | 390°F (~199°C) | 390°F (~199°C) | 350°F (~177°C) | 350°F (~177°C) | 350°F (~177°C) |
| Neck tube temperature | 350°F (~177°C) | | | | | |
| Die temperature | 350°F (~177°C) | | | | | |
| Screw speed | 200 RPM | | | | | |
| Cast wheel temperature | 70°F (21°C) | | | | | |

(continued)

<table>
<tr><td rowspan="2">Extruder temperature</td><td>Zone 1</td><td>Zone 2</td><td>Zone 3</td><td>Zone 4</td><td>Zone 5</td><td>Zone 6</td></tr>
<tr><td>250°F (~121°C)</td><td>390°F (~199°C)</td><td>390°F (~199°C)</td><td>350°F (~177°C)</td><td>350°F (~177°C)</td><td>350°F (~177°C)</td></tr>
<tr><td rowspan="2">Annealing roll temperature</td><td>Roll 1</td><td>Roll 2</td><td colspan="2">Roll 3</td><td>Roll 4</td><td>Roll 5</td></tr>
<tr><td>225°F (~107°C)</td><td>230°F (~110°C)</td><td colspan="2">230°F (~110°C)</td><td>230°F (~110°C)</td><td>230°F (~110°C)</td></tr>
</table>

Example 27 (EX-27)

A pressure sensitive adhesive was prepared by charging a gallon (3.8 liter) jar with 1) 1620 g of 2-OA, 2) 180 g of AA, 3) 0.72 g (0.04 phr) of IRGACURE 651, and 4) 36 g of citronellyl acrylate (CTA, for preparation see International Publication WO2014172185 (Lipscomb et al.). The mixture of monomers was purged with nitrogen for 10 minutes then exposed to low intensity ultraviolet radiation until a coatable prepolymer syrup was prepared. An additional 2.9 g (0.15 phr) of IRGACURE 651 was then added. The pre-adhesive formulation was then coated onto the PLA/PVAc film of EX-26 at a thickness of 2 mil (~50 micrometers) and cured under nitrogen by exposure to 366 mJ/cm$^2$ of UV A light and 113 mJ/cm$^2$ of UVC light over 1 minute.

To measure the 180 degree peel strength of EX-27, stainless steel (SS) plates were prepared by cleaning with one rinse of acetone followed by three rinses of heptane and drying. Adhesive tape samples were cut 2.54 cm wide by 20 cm long (1 in. by 8 in.). These samples were adhered to the stainless steel plates by means of the exposed adhesive, with 12.7 cm (5 in.) of length in contact with the plate, and rolled down with two passes in each direction of a 2 kg rubber roller. The samples were allowed to dwell for 15 minutes at 23° C/50% RH followed by peel adhesion testing at an angle of 180° at a rate of 30.5 cm/min (12 in./min) using an IMASS peel tester. The results were recorded in ounces/inch (oz/in) and also converted to Newtons/decimeter (N/dm). For EX-27, the result was as listed in Table 9.

TABLE 9

| Sample 180° | Peel Strengh, oz/inch (N/dm) |
|---|---|
| Example 27 | 65.74 (71.96) |

## Claims

**1.** An article comprising
a film wherein the film comprises
semicrystalline polylactic acid polymer;
polyvinyl acetate polymer having a Tg of at least 25°C;
plasticizer; and
a layer of adhesive disposed on the film,
wherein the film composition does not exhibit plasticizer migration, as determined by placing 0.2 grams of the film composition in a closed scintillation vial, aging at 80°C for 24 hours, and thereafter inspecting the sample surface, wherein samples having a dry surface are considered to pass and samples having a wet or oily surface are considered to fail;
wherein the film has a Tg less than 25°C; and
wherein the Tg of the polyvinyl acetate polymer and the film is determined in accordance with the method described in the description under the section entitled "DSC-Differential Scanning Calorimetry", the Tg referring to the midpoint temperature of the second heating scan.

**2.** The article of claim 1 wherein the article is a tape or sheet.

**3.** The article of claims 1 or 2 wherein the adhesive is a pressure sensitive adhesive.

**4.** The article of claims 1-3 wherein the polyvinyl acetate polymer has a weight average molecular weight ranging from 75,000 g/mol to 750,000 g/mol as determined by Size Exclusion Chromatography using polystyrene standards.

**5.** The article of claims 1-4 wherein the polyvinyl acetate polymer has a viscosity ranging from 10 to 50 mPa*s when the polyvinyl acetate polymer is dissolved in a 10% ethyl acetate solution at 20°C.

**6.** The article of claims 1-5 wherein the polyvinyl acetate polymer is present in an amount ranging from 10 to 50 wt.-%, based on the total amount of polylactic acid polymer(s), polyvinyl acetate polymer and plasticizer.

**7.** The article of claims 1-6 wherein the polyvinyl acetate polymer has a glass transition temperature no greater than 50°C.

**8.** The article of claims 1-7 wherein the plasticizer is present in an amount ranging from 5 to 35 wt.-%, based on the total amount of polylactic acid polymer(s), polyvinyl acetate polymer and plasticizer.

**9.** The article of claims 1 to 8 further comprising a nucleating agent in an amount ranging from about 0.01 wt% to about 1 wt%.

**10.** The article of claims 1-9 wherein the film is further **characterized by** any one or combination of the following properties:

i) wherein the film has a net melting endotherm for the first heating scan, $\Delta H_{nm1}$, greater than 10 and less than 40 J/g, the $\Delta H_{nm1}$ of the film being determined in accordance with the method described in the description under the section entitled "DSC-Differential Scanning Calorimetry";
ii) wherein the film has a tensile elongation from 50% to 600%;
iii) wherein the film has a tensile modulus from 50 MPa to 750 MPa;
iv) wherein the film has a tensile storage modulus as determine by dynamic mechanical analysis of at least 10 MPa for a temperature range from -40°C to 125°C when heated at a rate of 2°C/min;
v) wherein the film has a tensile storage modulus as determine by dynamic mechanical analysis of at least 5 MPa for a temperature range from 25°C to 80°C when heated at a rate of 2°C/min.

**11.** The article of claims 1-10 wherein the adhesive comprises a natural-rubber based pressures sensitive adhesive, a synthetic rubber-based pressure sensitive adhesive or an acrylic pressure sensitive adhesive.

**12.** The article of claims 1-11 wherein a primer is disposed between the film and adhesive layer.

**13.** The article of claims 1-12 wherein a low adhesion backsize or release liner is disposed on the opposite major surface of the film as the adhesive.

**14.** The article of claims 1-13 wherein the article is conformable such that the tape is transversely curvable at a radius of curvature of 7.5 cm.

**15.** The article of claims 1-14 wherein the article is a floor marking tape or a paint masking tape.

**Patentansprüche**

**1.** Ein Artikel, umfassend
eine Folie, wobei die Folie teilkristallines Polymilchsäurepolymer umfasst;
Polyvinylacetatpolymer mit einer Tg von mindestens 25 °C;
Weichmacher; und
eine auf der Folie angeordnete Klebeschicht,
wobei bei der Folienzusammensetzung, wie durch Geben von 0,2 Gramm der Folienzusammensetzung in ein geschlossenes Szintillationsfläschchen, Altern bei 80 °C über 24 Stunden und anschließendes Inspizieren der Probenoberfläche festgestellt, keine Weichmachermigration auftritt, wobei Proben mit einer trockenen Oberfläche als fehlerfrei und Proben mit einer nassen oder öligen Oberfläche als fehlerhaft gelten;
wobei die Folie eine Tg unter 25 °C aufweist; und
wobei die Tg des Polyvinylacetatpolymers und der Folie gemäß dem in der Beschreibung unter dem Abschnitt mit der Überschrift "dynamische Differenzkalorimetrie - DSC" beschriebenen Verfahren bestimmt wird, wobei sich die Tg auf die Mittelpunkttemperatur des zweiten Aufheizdurchlaufs bezieht.

2. Der Artikel nach Anspruch 1, wobei es sich bei dem Artikel um ein Band oder eine Folie handelt.

3. Der Artikel nach Anspruch 1 oder 2, wobei es sich bei dem Klebstoff um einen Haftklebstoff handelt.

4. Der Artikel nach den Ansprüchen 1 bis 3, wobei das Polyvinylacetatpolymer eine gewichtsmittlere Molmasse im Bereich von 75.000 g/mol bis 750.000 g/mol aufweist, die durch Größenausschlusschromatographie unter Verwendung von Polystyrolstandards bestimmt wird.

5. Der Artikel nach den Ansprüchen 1 bis 4, wobei das Polyvinylacetatpolymer, wenn das Polyvinylacetatpolymer bei 20 °C in einer 10 %igen Ethylacetatlösung gelöst ist, eine Viskosität im Bereich von 10 bis 50 mPa*s aufweist.

6. Der Artikel nach den Ansprüchen 1 bis 5, wobei das Polyvinylacetatpolymer in einer Menge im Bereich von 10 bis 50 Gew.-%, bezogen auf die Gesamtmenge an Polylactidsäurepolymer(en), Polyvinylacetatpolymer und Weichmacher, vorliegt.

7. Der Artikel nach den Ansprüchen 1 bis 6, wobei das Polyvinylacetatpolymer eine Glasübergangstemperatur von nicht mehr als 50 °C aufweist.

8. Der Artikel nach den Ansprüchen 1 bis 7, wobei der Weichmacher in einer Menge im Bereich von 5 bis 35 Gew.-%, bezogen auf die Gesamtmenge an Polylactidsäurepolymer(en), Polyvinylacetatpolymer und Weichmacher, vorliegt.

9. Der Artikel nach den Ansprüchen 1 bis 8, ferner umfassend ein Nukleierungsmittel in einer Menge im Bereich von etwa 0,01 Gew.-% bis etwa 1 Gew.-%.

10. Der Artikel nach den Ansprüchen 1 bis 9, wobei die Folie ferner **durch** eine der folgenden Eigenschaften oder eine Kombination der folgenden Eigenschaften **gekennzeichnet** ist:

    i) wobei die Folie eine Nettoschmelzendotherme beim ersten Aufheizdurchlauf, $\Delta H_{nml}$, von über 10 und unter 40 J/g aufweist, wobei die $\Delta H_{nml}$ der Folie gemäß dem in der Beschreibung unter dem Abschnitt mit der Überschrift "dynamische Differenzkalorimetrie - DSC" beschriebenen Verfahren bestimmt wird;
    ii) wobei die Folie eine Zugdehnung von 50 % bis 600 % aufweist;
    iii) wobei die Folie einen Zugmodul von 50 MPa bis 750 MPa aufweist;
    iv) wobei die Folie in einem Temperaturbereich von -40 °C bis 125 °C einen Zugspeichermodul, der durch dynamisch-mechanische Analyse bestimmt wird, von mindestens 10 MPa aufweist, wenn sie mit einer Geschwindigkeit von 2 °C/min erwärmt wird;
    v) wobei die Folie in einem Temperaturbereich von 25 °C bis 80 °C einen Zugspeichermodul, der durch dynamisch-mechanische Analyse bestimmt wird, von mindestens 5 MPa aufweist, wenn sie mit einer Geschwindigkeit von 2 °C/min erwärmt wird.

11. Der Artikel nach den Ansprüchen 1 bis 10, wobei der Klebstoff einen Haftklebstoff auf Naturkautschukbasis, einen Haftklebstoff auf Synthesekautschukbasis oder einen Acrylhaftklebstoff umfasst.

12. Der Artikel nach den Ansprüchen 1 bis 11, wobei eine Grundierung zwischen der Folie und der Klebeschicht aufgebracht ist.

13. Der Artikel nach den Ansprüchen 1 bis 12, wobei eine schwach klebende Rückseitenschicht oder Abziehfolie auf der gegenüberliegenden Hauptoberfläche der Folie als der Klebstoff angeordnet ist.

14. Der Artikel nach den Ansprüchen 1 bis 13, wobei der Artikel so nachgiebig ist, dass das Band mit einem Krümmungsradius von 7,5 cm in Querrichtung krümmbar ist.

15. Der Artikel nach den Ansprüchen 1 bis 14, wobei der Artikel ein Fußbodenmarkierungsband oder ein Malerabdeckband ist.

## Revendications

1. Article comprenant
un film dans lequel le film comprend un polymère acide polylactique semi-cristallin ;
un polymère acétate de polyvinyle ayant une Tg d'au moins 25 °C ;
un plastifiant ; et
une couche d'adhésif disposée sur le film,
dans lequel la composition de film ne présente pas de migration de plastifiant, telle que déterminée en plaçant 0,2 gramme de la composition de film dans un flacon de scintillation fermé, en faisant vieillir à 80 °C pendant 24 heures, et en inspectant par la suite la surface d'échantillon, dans lequel des échantillons ayant une surface sèche sont considérés comme satisfaisants et des échantillons ayant une surface mouillée ou huileuse sont considérés comme non satisfaisants ;
dans lequel le film a une Tg inférieure à 25 °C ; et
dans lequel la Tg du polymère acétate de polyvinyle et du film est déterminée conformément au procédé décrit en la description sous la section intitulée « DSC-Calorimétrie différentielle à balayage », la Tg désignant la température de point médian du deuxième balayage thermique.

2. Article selon la revendication 1, dans lequel l'article est un ruban ou une feuille.

3. Article selon les revendications 1 ou 2 dans lequel l'adhésif est un adhésif sensible à la pression.

4. Article selon les revendications 1 à 3 dans lequel le polymère acétate de polyvinyle a une masse moléculaire moyenne en poids allant de 75 000 g/mol à 750 000 g/mol telle que déterminée par chromatographie d'exclusion stérique en utilisant des étalons en polystyrène.

5. Article selon les revendications 1 à 4 dans lequel le polymère acétate de polyvinyle a une viscosité allant de 10 à 50 mPa*s lorsque le polymère acétate de polyvinyle est dissous dans une solution à 10 % d'acétate d'éthyle à 20 °C.

6. Article selon les revendications 1 à 5 dans lequel le polymère acétate de polyvinyle est présent en une quantité allant de 10 à 50 % en poids, sur la base de la quantité totale de polymère(s) acide polylactique, de polymère acétate de polyvinyle et de plastifiant.

7. Article selon les revendications 1 à 6 dans lequel le polymère acétate de polyvinyle a une température de transition vitreuse n'excédant pas 50 °C.

8. Article selon les revendications 1 à 7 dans lequel le plastifiant est présent en une quantité allant de 5 à 35 % en poids, sur la base de la quantité totale de polymère(s) acide polylactique, de polymère acétate de polyvinyle et de plastifiant.

9. Article selon les revendications 1 à 8 comprenant en outre un agent de nucléation en une quantité allant d'environ 0,01 % en poids à environ 1 % en poids.

10. Article selon les revendications 1 à 9 dans lequel le film est **caractérisé en outre par** l'une quelconque ou une combinaison des propriétés suivantes :

    i) dans lequel le film a un endotherme de fusion net pour le premier balayage thermique, $\Delta H_{nml}$, supérieur à 10 et inférieur à 40 J/g, le $\Delta H_{nml}$ du film étant déterminé conformément au procédé décrit dans la description sous la section intitulée « DSC-Calorimétrie différentielle à balayage » ;
    ii) dans lequel le film a un allongement à la traction de 50 % à 600 % ;
    iii) dans lequel le film a un module de traction de 50 MPa à 750 MPa ;
    iv) dans lequel le film a un module de conservation en traction tel que déterminé par analyse mécanique dynamique d'au moins 10 MPa pour une plage de température de -40 °C à 125 °C lorsqu'il est chauffé à une vitesse de 2 °C/min ;
    v) dans lequel le film a un module de conservation en traction tel que déterminé par analyse mécanique dynamique d'au moins 5 MPa pour une plage de température de 25 °C à 80 °C lorsqu'il est chauffé à une vitesse de 2 °C/min.

11. Article selon les revendications 1 à 10 dans lequel l'adhésif comprend un adhésif sensible à la pression à base de

caoutchouc naturel, un adhésif sensible à la pression à base de caoutchouc synthétique ou un adhésif sensible à la pression acrylique.

**12.** Article selon les revendications 1 à 11 dans lequel un apprêt est disposé entre le film et la couche adhésive.

**13.** Article selon les revendications 1 à 12 dans lequel un apprêt arrière à faible adhérence ou une feuille antiadhésive est disposé sur la surface principale du film opposée l'adhésif.

**14.** Article selon les revendications 1 à 13 dans lequel l'article épouse la forme de telle sorte que le ruban peut être courbé transversalement à un rayon de courbure de 7,5 cm.

**15.** Article selon les revendications 1 à 14 dans lequel l'article est un ruban de marquage de sol ou un ruban de masquage de peinture.

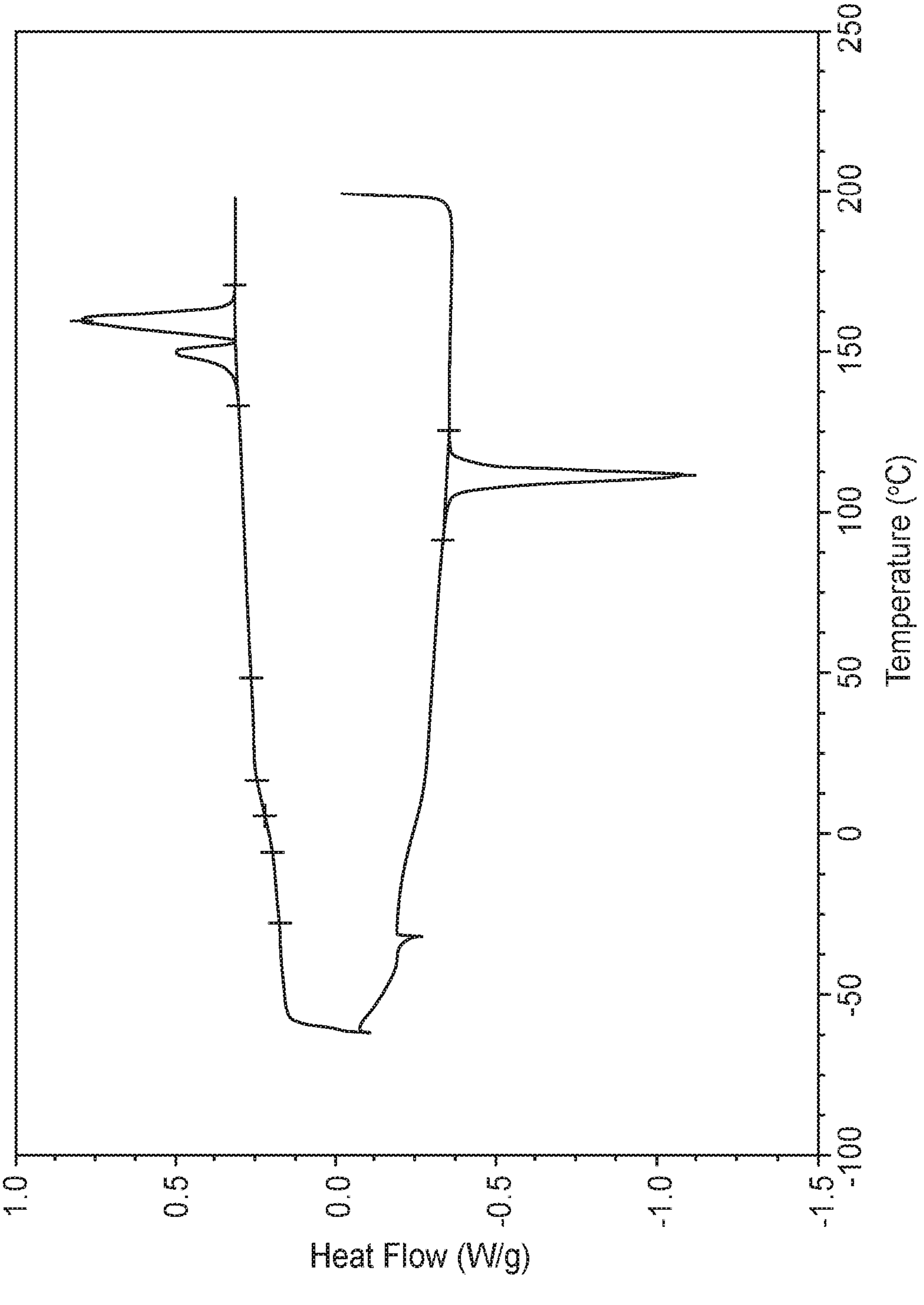
Heat Flow (W/g)
1.0
0.5
0.0
-0.5
-1.0
-1.5
Temperature (°C)
-100
-50
0
50
100
150
200
250

*Fig. 1*

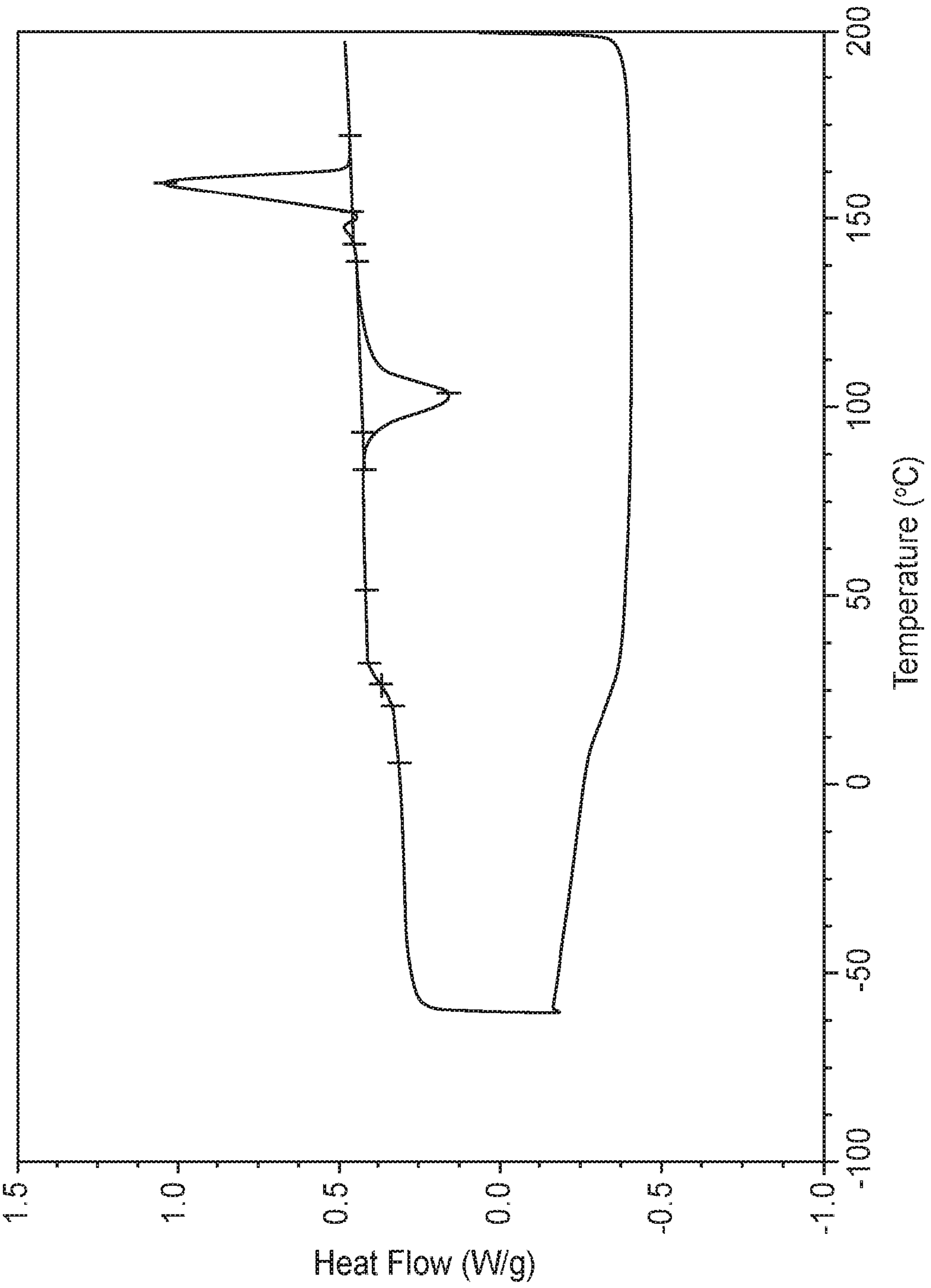
Heat Flow (W/g)
1.5
1.0
0.5
0.0
-0.5
-1.0
Temperature (°C)
-100
-50
0
50
100
150
200

*Fig. 2*

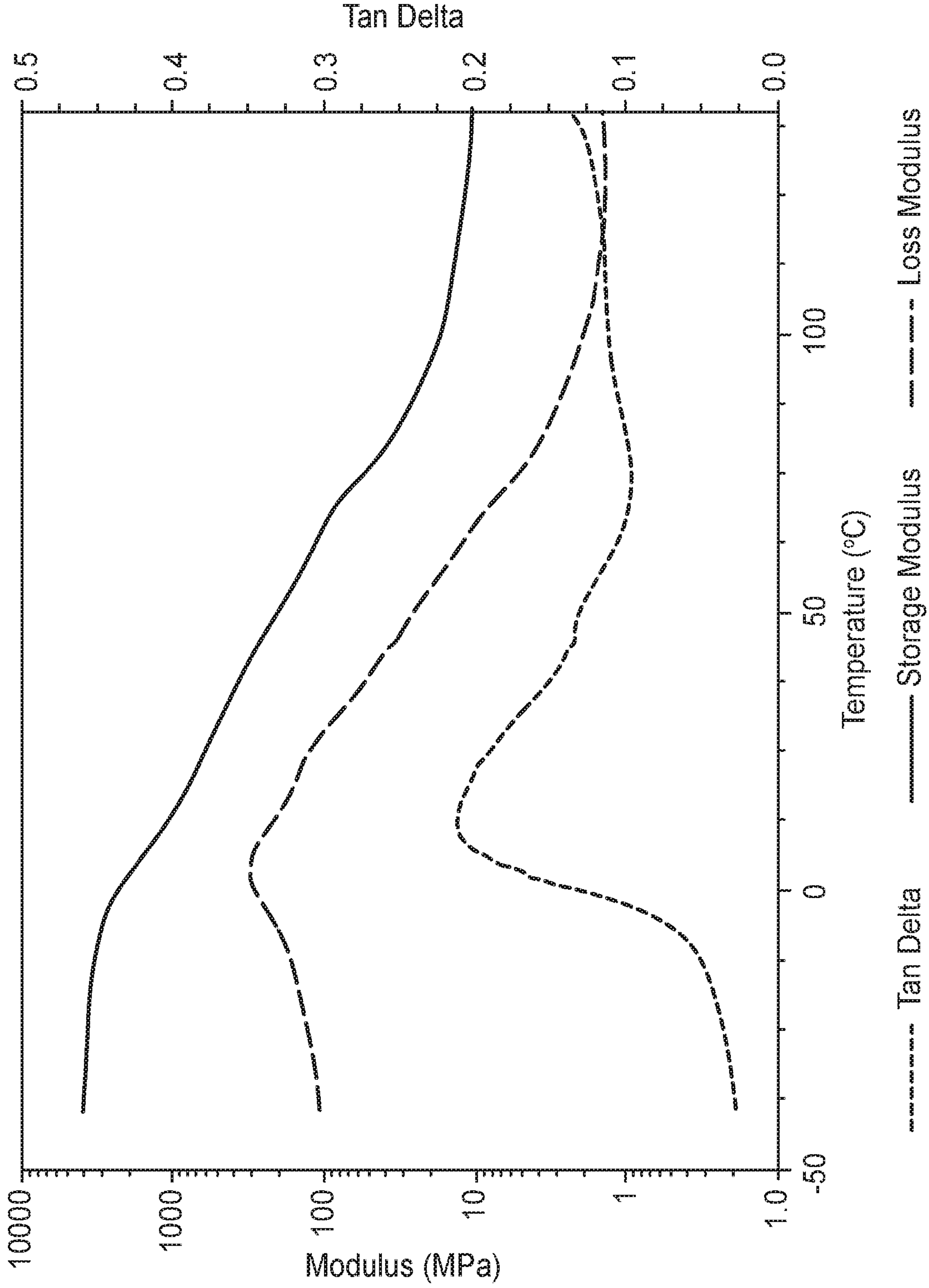
Tan Delta
0.5
0.4
0.3
0.2
0.1
0.0
Modulus (MPa)
10000
1000
100
10
1
1.0
-50
0
50
100
Temperature (°C)
Tan Delta
Storage Modulus
Loss Modulus

*Fig. 3*

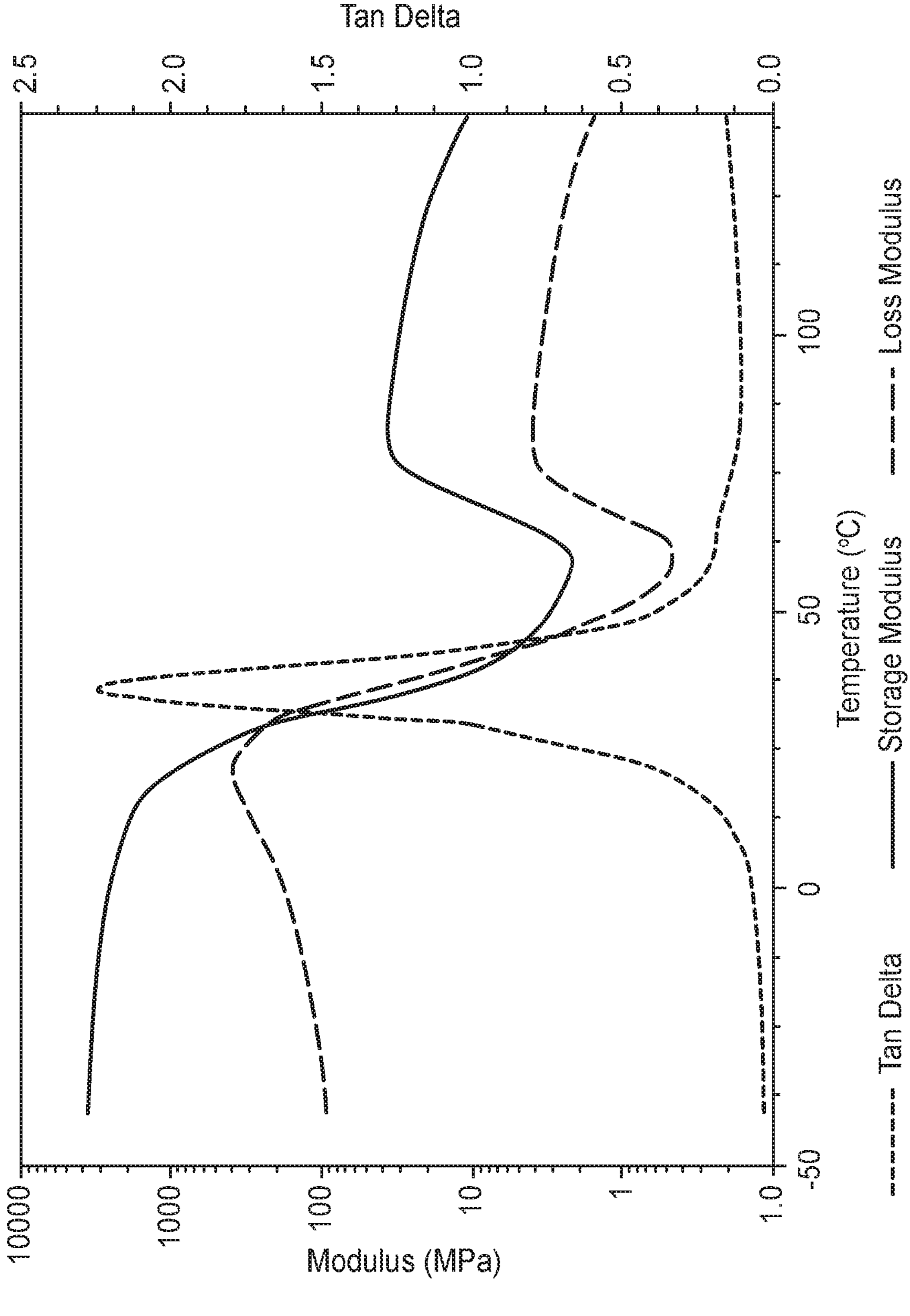
Tan Delta
2.5
2.0
1.5
1.0
0.5
0.0
Modulus (MPa)
10000
1000
100
10
1
0.1
-50
0
50
100
Temperature (°C)
Tan Delta
Storage Modulus
Loss Modulus

*Fig. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011082052 A
- US 8158731 B
- US 6005068 A
- US 5677376 A
- US 5623010 A
- WO 9815601 A
- WO 9903907 A
- US 20030215628, Ma
- US 6294249 B
- US 5296277 A
- WO 9829516 A
- WO 2014172185 A
- WO 2015157350 A
- US 20140138025 A
- US 3011988 A, Luedke
- US 5032460 A, Kantner
- US 7385020 B, Anderson


### Non-patent literature cited in the description


- **AJAY M. GAJRIA.** Miscibility and biodegradability of blends of poly(lactic acid) and poly( vinyl acetate). *Polymer,* 1996, vol. 37 (3), 437-444
- **MAJID JAMSHIDIAN et al.** Poly-Lactic Acid: Production, Applications, Nanocomposites, and Release Studies. *Comprehensive Reviews in Food Science and Food Safety,* 2010, vol. 9, 552-571
- *Macromolecules,* 1987, vol. 20 (4), 904-906
- *Polymer,* 12 July 2006, vol. 47 (15), 5430